# EUROPÄISCHE PATENTSCHRIFT

(11) **EP 3 912 242 B1**
(45) Veröffentlichungstag und Bekanntmachung des Hinweises auf die Patenterteilung: **24.04.2024**
(21) Anmeldenummer: 20700887.1
(22) Anmeldetag: 14.01.2020
(51) Int. Cl.: H02G 11/00, F16G 13/18, F16L 3/015, F16G 13/16, H02G 3/04

(54) **KOMPAKTE LEITUNGSSCHUTZFÜHRUNG FÜR REINRAUMANWENDUNGEN, SOWIE HÜLLEINHEIT UND ANORDNUNG MIT STÜTZKETTE HIERFÜR**
COMPACT PROTECTIVE CABLE CONDUIT FOR CLEAN ROOM APPLICATIONS, AND ENCASING UNIT AND ARRANGEMENT WITH SUPPORT CHAIN FOR SAME
GUIDAGE DE PROTECTION DE CONDUCTEURS COMPACTE POUR DES APPLICATIONS EN SALLES PROPRES, AINSI QU'UNITÉ DE MANCHON ET ASSEMBLAGE COMPRENANT UNE CHAÎNE D'APPUI POUR CELLE-CI

(30) Priorität: 14.01.2019 DE 202019100169 U; 11.06.2019 DE 202019103276 U
(43) Veröffentlichungstag der Anmeldung: 24.11.2021
(73) Patentinhaber: Igus GmbH, 51147 Köln (DE)
(72) Erfinder: HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/EP2020/050842
(87) Internationale Veröffentlichungsnummer: WO 2020/148300

(56) Entgegenhaltungen:
- EP-A1- 1 793 151
- EP-A2- 1 220 398
- WO-A1-2016/042134
- DE-B3-102006 019 133
- DE-U1- 8 801 061
- US-A- 3 160 175
- US-A1- 2012 205 498
- US-B2- 7 784 259

## Beschreibung

Die Erfindung betrifft allgemein das Gebiet der Leitungsführungseinrichtungen für Leitungen, wie z.B. Kabel zur Signal- oder Stromversorgung oder pneumatische bzw. hydraulische Schläuche oder dergleichen, die zwischen zwei relativbeweglichen Anschlussstelle einer Maschine oder Anlage dynamisch geführt werden sollen. Vorgeschlagen wird insbesondere eine dynamische Leitungsführungseinrichtung die zur Anwendung in Reinräumen geeignet ist, beispielsweise in der Halbleiter- oder Flachbildschirm-Herstellung, in pharmazeutischen Anlagen, in medizinischen Geräten, usw. In derartigen Anwendungen ist das Freisetzen von Partikeln durch die Leitungsführungseinrichtungen besonders unerwünscht und muss weitestgehend minimiert werden.

Energieführungsketten sind typische Leitungsführungseinrichtungen, in herkömmlicher Gliederketten-Bauweise mit Drehgelenken jedoch für Reinraumanwendung wenig geeignet, da solche Gliederketten selbst abriebbedingt im Betrieb Partikel freisetzen. Eine in dieser Hinsicht weiterentwickelte reinraumtaugliche Energieführungskette wurde in WO 02/086349 A1 vorgeschlagen. Diese Energieführungskette setzt dank biegsamer Gelenkverbindungen deutlich weniger Abrieb frei.

Ein bekanntes Problem besteht aber darin, dass auch die in einer ggf. abriebarmen Energieführungskette geführten Leitungen selbst im Betrieb Partikel freisetzen, da diese beim Verfahren bewegen, biegen und aneinander reiben. So geben z.B. die Ummantelungen der Kabel selbst beim Verfahren auch Partikel an die Umgebung ab.

Aus diesem Grund ist es bekannt, die Leitungen staubdicht zu umhüllen. Mehrere zu diesem Zweck weiterentwickelte Leitungsführungseinrichtungen für Reinraumanwendungen wurden von der Anmelderin in der WO 2016/042134 A1 vorgeschlagen. Eine dieser Lösungen (cf. dort FIG.10-16) ist inzwischen unter der Handelsbezeichnung "e-skin" von der Anmelderin (igus GmbH, D-51147 Köln) erhältlich.

Die vorliegende Erfindung betrifft nun speziell eine zur Reinraumanwendung geeignete Leitungsführungseinrichtung bzw. Leitungsschutzführung mit einer länglichen, flexiblen Umhüllung die reversibel bzw. hin- und hergehend verfahrbar ist, typisch unter Bildung eines Umlenkbogens zwischen zwei Trumen zwischen einer ersten Anschlussstelle und einer dazu relativbeweglichen Anschlussstelle. Dabei hat die vorgeschlagene Umhüllung eine Anzahl rohrförmig ausgeprägter Aufnahmen zur Führung mindestens einer Leitung, wobei jede Aufnahme sich kanalartig in einer Längsrichtung von einem ersten Ende zu einem zweiten Ende erstreckt, mit welchen die Schutzführung an den Anschlussstellen angebracht ist.

Gattungsgemäße Leitungsschutzführungen dieser Art sind bspw. unter der Handelsbezeichnung "GORE^{®} Trackless High Flex" von der Fa. W. L. Gore & Associates, Inc. oder unter der Handelsbezeichnung "ChannelFLEX^{™}" bzw. "EcoFlex^{™}" von der Fa. Hitachi Cable America Inc. erhältlich. Eine Variante der letztgenannten Leitungsschutzführung ist z.B. in DE 10 2012 100 290 B4 bzw. US 8,662,456 B2 beschrieben.

Derartige Leitungsschutzführungen sind technisch einfach aufgebaut und bauen kompakt und leicht. Sie haben jedoch bspw. gegenüber WO 2016/042134 A1 einen erheblichen Nutzungsnachteil. Eine Wartung, insbesondere ein Austausch einer einzelnen Leitung oder eines einzelnen Leitungsstrangs innerhalb einer mehrere Leitungen oder mehrere Leitungsstränge umfassenden Leitungsführung, ist nur mit erheblichem Aufwand möglich. Es kann insbesondere vor Ort kein Austausch einzelner Leitungen oder einzelner Leitungsstränge durch bereits mit den gewünschten Steckern bzw. Kupplungen passend vorkonfektionierte Leitungen erfolgen. Dies würde die Wartung erheblich vereinfachen und Kosten senken. Im Gegensatz dazu werden gattungsgemäße Leitungsführungen typisch vollständig als Paket erneuert, sodass dabei auch intakte Leitungen ausgetauscht werden müssen. Außerdem ist eine nachträgliche Veränderung einer installierten Leitungsführung, z.B. zur Ergänzung mit weiteren Leitungen, nicht ohne weiteres möglich.

Aus DE 88 01 061 U1 ist ein Leitungsverbund mit zwei beidseitig angeordneten Stützketten bekannt, der mittels mehrteiliger Klemmleisten zusammengehalten wird. Die Stützketten sind dabei jeweils in einem separaten Schlauch aufgenommen. Zum Austausch eines dieser Schläuche muss die zugehörige Klemmleiste auseinandergeschraubt werden.

Auf einem anderen Teilgebiet der Leitungsführungen, nämlich mehraxial beweglicher Leitungsführungen für Roboterarme, offenbart die EP 1 793 151 A1 einen Leitungsverbund mit flexiblen, energieführenden Leitungen, die einen orts- oder maschinenfesten Anschluss mit einem beweglichen Maschinenteil verbinden. Hierbei ist jede Leitung in einem biegsamen Schlauch bzw. davon fest umgeben, wobei an die Schläuche eine T-Nut und ein T-förmiger Vorsprung angeformt sind, die sich über die Leitungslänge erstrecken. Hierbei greifen der T-förmige Vorsprung und die T-Nut benachbarter Schläuche formschlüssig ineinander und sind in Längsrichtung gegeneinander verschiebbar, so dass die Schläuche sich im Verbund axial zueinander verschieben können. Diese Lösung ist nicht abriebarm für Reinraumanwendungen ausgelegt und erlaubt einen Austausch einzelner Leitungen nur durch vollständiges Ausziehen in Längsrichtung.

Vor diesem Hintergrund liegt eine Aufgabe der vorliegenden Erfindung darin, eine relativ kompakt bauende und/oder gewichtsarme Leitungsschutzführung vorzuschlagen, welche die vorgenannten Nachteile zumindest teilweise überwindet.

Die Erfindung soll insbesondere den Austausch einzelner Leitungen oder einzelner Leitungsstränge und/oder optional verwendeter Stützketten vereinfachen. Sie soll zudem nachträgliche Veränderungen vereinfachen. Dies wird erreicht durch eine Leitungsschutzführung nach Anspruch 10 bzw. eine Hülleinheit hierfür nach dem Anspruch 1. Speziell für Stützketten wird dies ferner erreicht durch eine Anordnung nach Anspruch 17.

Bei einer Leitungsschutzführung nach dem Oberbegriff aus Anspruch 10, mit einer Umhüllung, die an einer Längsseite ein erstes Befestigungsband und an der anderen Längsseite ein zweites Befestigungsband umfasst, wird vorgeschlagen, dass das erste und das zweite Befestigungsband gegenüberliegend angeordnet und für eine lösbare Verbindung durch Formschluss und/oder Kraftschluss zueinander passend und in einer Verbindungsrichtung quer zur Längsrichtung miteinander verbindbar ausgeführt sind, um mehrere Hülleinheiten mit zueinander passenden Befestigungsbändern durch Verbinden der Befestigungsbänder in Verbindungsrichtung quer zur Längsrichtung lösbar aneinander zu Befestigen. Das erste und das zweite Befestigungsband ist dabei jeweils einteilig mit der Hülleinheit ausgeführt.

So können einzelne Hülleinheiten wahlweise komplett mit einem neuen Leitungsstrang und/oder einer oder mehreren Stützketten ausgetauscht werden. In der Praxis hat sich insbesondere ein getrennter Austausch ggf. verwendeter Stützketten als vorteilhaft erwiesen, da diese üblicherweise vor den Versorgungsleitungen versagen bzw. ausgetauscht werden müssen. So kann ein bisher üblicher Komplettaustausch der gesamten Leitungsschutzführung vermieden werden.

Unter einem Leitungsstrang wird dabei ein Bündel von Leitungen verstanden, insbesondere von zusammenhängenden Leitungen. Insbesondere sei an einen teilweisen Austausch einzelner Leitungsstränge gedacht, die von einer oder mehreren Hülleinheiten mit einer oder mehreren Aufnahmen aufgenommen sind.

Ergänzend kann nach einem weiteren Aspekt vorgesehen sein, dass ein Funktionsbereich einen Verschluss zum Öffnen und Schließen einer oder mehrerer Aufnahmen bereitstellt, sodass eine oder mehrere Leitungen quer zur Längsrichtung bzw. seitlich/radial, insbesondere ohne Demontage der kompletten Umhüllung, eingefügt bzw. entnommen werden kann. Dazu kann der Funktionsbereich insbesondere zwei zusammenwirkende Verschlussprofile aufweisen, die zum möglichst staubdichten Schließen gestaltet sind und einen geöffneten Zustand der Aufnahme(n) ermöglichen, in welchem eine Leitung quer zur Längsrichtung eingefügt bzw. entnommen werden kann.

Gemäß dem Grundgedanken der vorliegenden Erfindung ist vorgesehen, dass der bzw. ein Funktionsbereich ein Befestigungsband zum bedarfsweisen Lösen bzw. Anbringen mindestens eines Teils der Umhüllung bzw. einer Aufnahme, umfasst oder bildet.

Das Befestigungsband kann grundsätzlich nach einem beliebigen Verbindungsprinzip, durch Formschluss und/oder Kraftschluss, für eine zerstörungsfrei lösbare Verbindung mit einem entsprechenden Band bzw. zusammenwirkenden Funktionsbereich ausgeführt sein. Das Befestigungsband kann insbesondere als Befestigungsleiste oder Befestigungsprofil ausgeführt sein.

Die Gestaltung der Befestigungsbänder ist dabei so gewählt, dass diese in einer Verbindungsrichtung quer zur Längsrichtung, insbesondere senkrecht zur Längsrichtung miteinander verbindbar ausgeführt sind. Quer zur Längsrichtung bedeutet dabei insbesondere eine Verbindungs- bzw. Fügerichtung in einer Ebene senkrecht zur Längsrichtung der einzelnen kanalartigen Aufnahmen, sodass eine als Ersatz dienende Umhüllung mit neuer Befüllung, etwa neuen Leitungen oder insbesondere einer oder mehreren neuen Stützketten, leicht an die bereits montierte restliche Anordnung seitlich angebracht werden kann, ohne dass dabei die verbleibenden Umhüllungen voneinander gelöst oder gar demontiert werden müssen. Es sind in der Regel hierzu lediglich die Endanschlüsse, z.B. dortige Klemmvorrichtungen, für den Austausch zu öffnen.

Gemäß dem Grundgedanken wird bedarfsweise nur ein Teil der Umhüllung mitsamt den betroffenen Leitungen oder insbesondere einer oder mehrerer auszutauschender Stützketten getauscht. Dabei sei sowohl an den Austausch einer einzelnen Aufnahme mit einer oder mehreren Leitungen bzw. Stützketten oder den Austausch einer Hülleinheit mit einem Leitungsstrang gedacht.

In einer Ausführungsform umfasst die Umhüllung eine Mehrzahl separater Hülleinheiten und jede Hülleinheit weist zwei beidseitig gegenüberliegende, mit der Hülleinheit einteilige Befestigungsbänder auf. Dabei sind benachbarte Hülleinheiten durch die Befestigungsbänder parallel miteinander verbunden und am ersten und zweiten Ende ist jeweils eine Klemmvorrichtung vorgesehen ist, mit welcher die Mehrzahl separater Hülleinheiten der Umhüllung jeweils endseitig festgelegt sind.

Eine Hülleinheit hat jeweils mindestens eine Aufnahme für eine oder mehrere Leitungen bzw. einen Leitungsstrang oder auch für eine Stützkette an sich bekannter Bauweise. Die Aufnahmen können insbesondere rohrförmig ausgeführt sein.

Insbesondere bei Anwendungen mit längeren Verfahrwegen bzw. Umhüllungen ist es vorteilhaft, wenn in einer Aufnahme mindestens einer Hülleinheit eine Stützkette zum Stützen der Umhüllung beim Verfahren vorgesehen ist. Es können dabei an sich bekannte Stützketten in der Bauweise von Gliederketten verwendet werden.

In einer Ausführungsform umfasst die Umhüllung mindestens eine Hülleinheit aus weichelastischem bzw. biegeelastischem Kunststoff, welche vorzugsweise einteilig ausgeführt ist. Die Hülleinheit könnte auch mehrteilig zusammengesetzt sein, z.B. aus zwei symmetrischen Halbhüllen bzw. ähnlich im Längsschnitt geteilten Rohrstücken. Eine einteilige Hülleinheit ist hier bevorzugt und kann z.B. Dichtheit gegen Partikelaustritt verbessern.

Wandstärke und Material der Umhüllung sind so gewählt, dass diese flexibel ausgeführt ist. Als weichelastischer bzw. biegeelastischer Kunststoff kommt bevorzugt ein Kunststoff, insbesondere Thermoplast, mit einer Shore Härte im Bereich von 20 Shore A (ShA 20) bis 65 Shore D (ShD 65), insbesondere im Bereich von 50 Shore A (ShA 50) bis 100 Shore A (ShA 100) in Betracht.

Erfindungsgemäß ist das Befestigungsband jeweils einteilig mit der Hülleinheit verbunden (soz. nur durch Zerstörung lösbar). Hierzu kann dieses unmittelbar einstückig mit der Hülleinheit hergestellt oder auch separat hergestellt und nachträglich stoffschlüssig durch ein Fügeverfahren mit dieser verbunden sein, z.B. durch ein geeignetes thermisches Fügeverfahren, insbesondere Verschweißung. Im Rahmen der Erfindung liegt insbesondere eine separate Herstellung eines "vereinfachten Profils" ohne Funktionsbereich einerseits und des Funktionsbereichs bzw. Befestigungsbands andererseits, z.B. jeweils durch Extrudieren aus verschiedenen besonders geeigneten Kunststoffen, insbesondere Thermoplasten. Der Funktionsbereich bzw. das Befestigungsband kann anschließend stoffschlüssig in Längsrichtung mit dem Rest der Hülleinheit zu einem Teil verbunden werden, z.B. durch ein Schweißverfahren zum Verschweißen von Kunststoffen.

In einer Ausführungsform wird die Umhüllung aus einer Mehrzahl separater Hülleinheiten zusammengesetzt. Dabei kann jede Hülleinheit jeweils genau eine Aufnahme bilden.

Weiterhin kann eine Hülleinheit auch eine Mehrzahl von Aufnahmen umfassen.

Erfindungsgemäß weist jede Hülleinheit zwei beidseitig gegenüberliegende, mit der Hülleinheiten einteilige Befestigungsbänder auf, mittels welcher benachbarte Hülleinheiten parallel miteinander verbindbar sind. Die Befestigungsbänder sind zwecks unmittelbarer Zusammenwirkung zueinander passend, z.B. konjugiert bzw. formschlüssig ineinandergreifend, ausgeführt sein. Sie können auch nicht wie in der beanspruchten Erfindung mit einer separaten Befestigungsleiste zusammenwirken, welche zur Befestigung der Hülleinheiten miteinander verwendet wird.

In einer bevorzugen Ausführungsform wird eine Umhüllung von einer Mehrzahl von Hülleinheiten gebildet, welche jeweils gleich viele oder abweichend viele Aufnahmen aufweisen. Optional kann eine einzelne Hülleinheit insbesondere derart viele Aufnahmen aufweisen, dass ein Leitungsstrang von genau einer Hülleinheit aufgenommen werden kann. Somit wird vorteilhaft ermöglicht, dass innerhalb einer Umhüllung einzelne Leitungsstränge durch den Austausch der jeweilig zugehörigen Hülleinheit ausgetauscht werden können. Als Leitungsstrang werden dabei insbesondere Bündel bzw. Gruppen aus funktional zusammengehörenden Leitungen bezeichnet, z.B. gruppiert nach verschleißanfälligkeit bzw. Lebensdauer.

Jede Aufnahme hat bevorzugt zur Reduzierung von Verformung im Umlenkbogen einen langrunden oder ovalen, insbesondere spitzovalen, Querschnitt, wobei die Befestigungsbänder an den Schmalseiten angeordnet sind.

Jede Hülleinheit kann zudem seitlich, insbesondere dem Befestigungsband gegenüberliegend, zwei mit der Hülleinheit einteilige Verschlussprofile aufweisen.

In einer Ausführungsform kann vorgesehen sein, dass die Verschlussprofile einer Hülleinheit durch Verbinden mit dem Befestigungsband einer benachbarten Hülleinheit form- und/oder kraftschlüssig schließbar sind. Hierdurch kann z.B. bei Übermaß der Verschlussprofile, die in das gegenüberliegende Befestigungsband greifen, ein besonders robuster Verschluss erzielt werden, ohne zusätzlichen Montageschritt. Alternativ nicht wie in der beanspruchten Erfindung können benachbarte Hülleinheiten jeweils durch eine separate, flexible Befestigungsleiste, welche mit den Befestigungsbändern zusammenwirkt, parallel miteinander verbunden werden. So wird das Lösen des Verschlusses von der Befestigung durch die Befestigungsbänder getrennt, d.h. ein Abtrennen einer Hülleinheit kann nicht zum ungewollten Öffnen der angrenzenden Hülleinheit führen, sodass keine Abriebpartikel ungewollt freigesetzt werden. In einer weiteren Ausführungsform ist vorgesehen, dass die Hülleinheit Unterteilungen umfasst, welche mehrere parallele Aufnahmen bilden und die Hülleinheit einen Verschluss aufweist, insbesondere mindestens zwei mit der Hülleinheit einteilige Verschlussprofile. So kann u.a. der Montageaufwand bei Anwendungen mit einer hohen Anzahl zu führender Leitungen verringert werden, da nicht für jede Leitung eine einzelne zu montierende Hülleinheit vorgesehen wird. In dieser Ausführungsform hat jede Aufnahme vorzugsweise einen zugeordneten eigenen Verschluss, sodass alle Leitungen getrennt zugänglich bleiben. Dazu kann an jeder Aufnahme ein Paar zusammenwirkender Verschlussprofile einteilig mit der Hülleinheit vorgesehen sein.

Bei großen Führungslängen oder besonders weichelastischen Umhüllungen bzw. Hülleinheiten kann in mindestens einer vorzugsweise in zwei seitlich äußeren Aufnahmen eine Stützkette, insbesondere aus einzelnen Kettengliedern, vorgesehen sein, welche ausgeführt ist, um einen Umlenkradius des Umlenkbogens vorzugeben und/oder ein freitragendes Trum in Strecklage zu stützen.

In bevorzugter Ausführungsform ist an jeder Schmalseite der Umhüllung, bei unterteilter Hülleinheit insbesondere jeweils mit dieser einteilig, ein Befestigungsprofil als Befestigungsband vorgesehen. Neben der Erweiterbarkeit kann dadurch bspw. alternativ zu einer Stützkette eine andersartige Stützvorrichtung extern an den Befestigungsprofilen der Umhüllung angebracht werden. Somit wird kein nutzbarer Aufnahmekanal zur Stützfunktion benötigt. Hierzu kann an jeder Schmalseite der Umhüllung jeweils eine externe Stützvorrichtung mit dem Befestigungsprofil verbunden sein die abriebarm ausgeführt ist um einen Umlenkradius des Umlenkbogens vorzugeben und/oder ein freitragendes Trum in Strecklage zu stützen. Bevorzugt hat dazu jede Stützvorrichtung ein Tragband und senkrecht dazu stehende Anschlagelemente, insbesondere T-förmige Anschlagelemente deren T-Arme im Umlenkbogen radial innen bzw. in Strecklage im Anschlag stehen. Das Tragband liegt vorzugsweise auf Höhe der neutralen Faser.

Eine Ausführungsform sieht vor, dass die Umhüllung eine Mehrzahl separater und umfänglich geschlossener Hülleinheiten umfasst. Dabei kann jede Hülleinheit jeweils genau eine Aufnahme bilden. Jede Hülleinheit weist als Funktionsbereiche zur Befestigung zwei beidseitig gegenüberliegende, mit der Hülleinheiten einteilige Befestigungsbänder auf.

Dabei können die Befestigungsbänder zur formschlüssigen Zusammenwirkung unmittelbar miteinander, z.B. in Art eines Reißverschlusses oder Gleitverschlusses oder dgl. ausgeführt sein, oder nicht wie in der beanspruchten Erfindung mit einer separaten Befestigungsleiste form- und/oder kraftschlüssig zusammenwirken.

Hülleinheiten gemäß jedem der beiden Aspekte, auch mit einer Kombination der Verschluss- und Befestigungsfunktion, können einen in Längsrichtung gleichbleibenden Querschnitt haben. Dies erlaubt eine profilartige Herstellung in einem Extrusionsverfahren, vorzugsweise aus weichelastischem bzw. biegeelastischem Kunststoff. Der Funktionsbereich kann dabei ggf. separat extrudiert werden. Somit können insbesondere auch das erste und das zweite Befestigungsband einen in Längsrichtung gleichbleibenden Querschnitt haben, beispielsweise mit ineinandergreifendem Haken- und Klauenprofil oder ähnlicher geeigneter Formgebung, vorzugsweise mit einer Widerhaken-Funktion

Auch ein als Verschluss dienender Funktionsbereich lässt sich bspw. in Extrusion herstellen, wenn der Funktionsbereich zwei konjugierte ineinandergreifende in Längsrichtung durchgehende gleichbleibende Verschlussprofile aus Kunststoff aufweist, die als Druckverschluss oder zahnloser Schiebeverschluss oder vorzugsweise ähnlich einem Ziehverschluss zusammenwirken. Dabei kann jedes Verschlussprofil zwei Eingriffsprofile umfassen, und soz. einen Doppelverschluss bilden.

Es können zwei seitlich gegenüberliegende Befestigungsbänder als Funktionsbereiche vorgesehen sein, welche jeweils ein Befestigungsprofil aufweisen, wobei die Befestigungsprofile vorzugsweise für eine formschlüssige Verbindung, z.B. eine Feder-Nut-Verbindung oder dgl., ausgeführt sind, die lediglich in Längsrichtung lösbar ist. So kann ein ungewolltes Ablösen von Hülleinheiten im Betrieb vermieden werden.

Zu demselben Zweck sind die Befestigungsbänder bzw. Befestigungsprofile sind vorzugsweise so ausgeführt, dass im Vergleich zur Verbindung zueinander passender Befestigungsprofile in Verbindungsrichtung, diese nur mir deutlich höherem Kraftaufwand entgegen der Verbindungsrichtung lösbar sind oder lediglich in Längsrichtung lösbar sind. Hierzu können die Befestigungsprofile vorzugsweise einen Querschnitt mit Widerhaken-Funktion aufweisen, es sind jedoch auch andere Formen möglich.

Zur Erleichterung der Verbindung zweier Umhüllungen in der gewünschten Verbindungsrichtung ist es vorteilhaft, wenn das erste Befestigungsprofil und/oder das zweite Befestigungsprofil mindestens eine Einführschräge aufweist, welche schräg zur Verbindungsrichtung verläuft. Entsprechende geometrische Form ist bspw. in EP 1 220 398 A2 beschrieben, dort für Befestigungsprofile zum Bündeln von statischen Kabeln oder Schläuchen. In einer bevorzugten Weiterbildung sind die Befestigungsprofile zu einer Mittelebene, insbesondere zur neutralen Faser, symmetrisch ausgeführt, wobei das erste Befestigungsprofil und/oder das zweite Befestigungsprofil zwei symmetrisch angeordnete Einführschrägen aufweisen können.

Vorzugsweise sind benachbarte Aufnahmen parallel miteinander verbunden bzw. gekoppelt durch bandförmige Zwischenbereiche, welche die neutrale Faser vorgeben. Alternativ oder ergänzend liegt bevorzugt zu jedem Verschluss aus zusammenwirkenden Verschlussprofilen die Schnittstelle auf Höhe der neutralen Faser der Umhüllung. Die neutrale Faser soll insbesondere mittig durch den Querschnitt der Aufnahmen verlaufen. Hierbei kann zwischen jedem Befestigungsband und einer angrenzenden Aufnahme ein im Vergleich zur Bauhöhe des jeweiligen Befestigungsbands dünnerer bandförmiger Zwischenbereich vorgesehen sein. Hierdurch kann insbesondere eine gute Biegsamkeit des Umlenkbogens um die gewünschte Achse bei hinreichender Steifigkeit in Querrichtung erzielt werden. Bevorzugt ist die Umhüllung im Wesentlichen linear (nicht mehraxial) verfahrbar gestaltet.

Endseitig können an der Umhüllung Klemmvorrichtungen vorgesehen sein, welche die Umhüllung und ggf. die Leitungen in Axialrichtung gegen Austritt von Staubpartikeln verschließen. Im typischen Anwendungsfall werden mindestens zwei Leitungen, meist eine Vielzahl Leitungen, voneinander getrennt in einer jeweiligen Aufnahme geführt und von der Umhüllung möglichst staubdicht umschlossen. Auch an den stirnseitigen Enden sollen keine Partikel austreten.

Die Erfindung betrifft nach Anspruch 1 eine Hülleinheit als Einzelteil zur Herstellung einer Umhüllung nach einer der vorstehenden Ausführungsformen. Diese Hülleinheit ist z.B. aus Kunststoff, insbesondere weichelastischem bzw. biegeelastischem Kunststoff, hergestellt und hat mindestens eine rohrförmige Aufnahme zur Führung mindestens einer Leitung, welche sich kanalartig in einer Längsrichtung von einem ersten Ende zu einem zweiten Ende erstreckt. Die Hülleinheit kann dabei als Mantel zur in Umfangsrichtung staubdichten Umhüllung der Leitung(en) betrachtet werden und umgibt die Leitungen typisch lose (im Gegensatz zu einer eigentlichen, isolierenden Kabelummantelung).

Die Umhüllung hat an einer Längsseite ein erstes Befestigungsband, insbesondere Befestigungsprofil, und an der anderen Längsseite ein zweites Befestigungsband, insbesondere Befestigungsprofil. Die Hülleinheit kann dabei mehrere, insbesondere parallele und rohrförmige, ausgeprägte Aufnahmen zur getrennten Führung von jeweils mindestens einer Leitung bilden oder jeweils genau eine Aufnahme.

Erfindungsgemäß, hat die Hülleinheit an einer Längsseite ein erstes Befestigungsband, insbesondere Befestigungsprofil, und an der anderen Längsseite ein zweites Befestigungsband, insbesondere Befestigungsprofil, und die Befestigungsbänder, insbesondere Befestigungsprofile, gegenüberliegend angeordnet und für eine lösbare Verbindung durch Formschluss und/oder Kraftschluss zueinander passend ausgeführt sind. Dies erlaubt es mehrere Hülleinheiten mit zueinander passenden bzw. paarweise baugleichen Befestigungsbändern, insbesondere Befestigungsprofilen, lösbar aneinander zu Befestigen. Hierbei können die Befestigungsbänder, insbesondere Befestigungsprofile, so ausgeführt bzw. gestaltet sein, dass diese in einer Verbindungsrichtung quer zur Längsrichtung miteinander verbindbar sind. Das erste und das zweite Befestigungsband ist dabei jeweils einteilig mit der Hülleinheit ausgeführt.

Bei baugleichen Befestigungsbändern sei insbesondere an eine Leiste oder ein Profil gedacht, wobei die Hülleinheit an einer ersten Längsseite eine Leiste und an einer zweiten Längsseite ein Profil aufweisen kann und wobei die Leiste einer ersten Hülleinheit formschlüssig und/oder durch Kraftschluss mit dem Profil einer zweiten Hülleinheit verbunden werden kann. Dabei kann die erste Hülleinheit insbesondere baugleich mit der zweiten Hülleinheit ausgebildet sein oder z.B. eine abweichende Anzahl von Aufnahmen aufweisen.

In einer Ausführungsform weist die Hülleinheit an einer Längsseite ein erstes Befestigungsprofil und an der anderen Längsseite ein zweites Befestigungsprofil auf, welche komplementär oder konjugiert bzw. zueinander passend aber voneinander verschieden gestaltet sind wobei die Befestigungsprofile für eine lösbare Verbindung durch Formschluss und/oder Kraftschluss zueinander passend ausgeführt sind um mehrere baugleiche Hülleinheiten lösbar aneinander zu Befestigen.

Die vorgeschlagene Hülleinheit selbst kann vorteilhaft ferner eines oder mehrere der diese weiterbildenden Merkmale nach einem der Unteransprüche 2 bis 9 oder 11 bis 16 aufweisen. Weiterhin kann die Hülleinheit mehrere oder genau eine rohrförmige Aufnahme zur getrennten Führung von jeweils mindestens einer Leitung oder eines Leitungsstranges bilden. Diese Ausführungsform ist vorteilhaft, wenn die Hülleinheit in Umfangsrichtung um die Aufnahme geschlossen hergestellt ist, sodass ein Austreten von Partikeln am Betriebsort zuverlässig vermieden wird.

Weiterhin wird eine Anordnung mit einer oder mehreren Stützketten nach Anspruch 17 vorgeschlagen. Bei einer solchen gattungsgemäßen Anordnung wird erfindungsgemäß vorgeschlagen, dass jede Stützkette in einer zugeordneten Hülleinheit geführt ist, welche ausschließlich der Stützfunktion dient bzw. die zugeordnete(n) Stützkette(n) aufnimmt, sodass mit der zugeordneten Hülleinheit die Stützkette(n) getrennt von in der Umhüllung geführten Leitungen austauschbar sind bzw. ist. Somit ist es - im Gegensatz zur bisher üblichen Praxis - bei drohendem oder erfolgtem Ausfall einer Stützkette nicht mehr nötig die gesamte Leitungsführung mitsamt typischerweise noch betriebsfähiger Leitungen auszutauschen. Die ersetzende Hülleinheit mit Stützkette(n) kann dann z.B. in einem einfachen Schritt seitlich an den vorhandenen Aufbau angefügt und anhand der Befestigungsbänder bzw. -profile befestigt werden. Die Hülleinheiten können dabei insbesondere gemäß einer der vorliegend beschriebenen, bevorzugten Ausführungsformen ausgeführt sein.

Weitere Einzelheiten und Vorteile der Erfindung lassen sich, ohne Beschränkung der Allgemeinheit des Vorstehenden, der nachfolgenden Erläuterung bevorzugter Ausführungsbeispiele anhand der beigefügten Zeichnungen entnehmen. Hierbei zeigen:
- FIG.1A-1C:: ein erstes Ausführungsbeispiel einer verfahrbaren Leitungsschutzführung mit einer flexiblen Umhüllung, in Teilansicht eines Endbereichs, teilweise aufgebrochen (FIG.1A), im Querschnitt einzelner Hülleinheiten (FIG.1B) sowie in Frontansicht eines Endes mit einer endseitigen Klemmvorrichtung (FIG.1C);
- FIG.2:: ein weiteres nicht unter den Schutzumfang des Anspruchs fallendes Ausführungsbeispiel mit gegenüber FIG.1A-1C abgewandelten einzelnen Hülleinheiten in Querschnittsdarstellung (explodiert);
- FIG.3A-3B:: eine nicht unter den Schutzumfang des Anspruchs fallende Weiterbildung mit Hülleinheiten gemäß FIG.2 und zusätzlichen Stützvorrichtungen, explodiert im Querschnitt (FIG.3B) und als perspektivische Teilansicht eines Endbereichs (FIG.3A);
- FIG.4A-4D:: ein weiteres Ausführungsbeispiel mit einer einteiligen Hülleinheit, die zur Bildung mehrerer Leitungsaufnahmen unterteilt ist, im geöffnet im Querschnitt (FIG.4A) und in Perspektivansicht (FIG.4B) und geschlossenen im Querschnitt (FIG.4C) und in Perspektivansicht mit endseitiger Klemmvorrichtung (FIG.4D);
- FIG.5:: ein Anwendungsbeispiel mit Ausführungsform nach FIG.4A-4D mit zwei parallel aneinander gekoppelten unterteilten Hülleinheiten und außenseitigen Stützketten im Querschnitt;
- FIG.6:: ein weiteres Ausführungsbeispiel mit gegenüber FIG.4-5 abgewandeltem Verschluss im Querschnitt;
- FIG.7A-7B:: ein weiteres Ausführungsbeispiel mit einzelnen umfänglich geschlossenen Hülleinheiten, welche durch seitliche Befestigungsprofile lösbar miteinander verbunden sind;
- FIG.8:: eine typische Anordnung einer Leitungsschutzführung bzw. Leitungsführungsreinrichtung in schematischer Seitenansicht; und
- FIG.9A-9D:: ein besonders bevorzugtes Ausführungsbeispiel mit einer Hülleinheit, welche mehrere Aufnahmen aufweist und welche durch seitliche Befestigungsprofile lösbar miteinander verbunden sind;
- FIG.10A-10D:: ein weiteres Ausführungsbeispiel mit einer Hülleinheit, welche mehrere Aufnahmen aufweist, die einzeln befüllbar sind, sowie bevorzugter Querschnitte zugehöriger Funktionsbereiche;
- FIG.11-12:: weitere Ausführungsbeispiele als Varianten zu FIG.10A-10D;
- FIG.13A-13C:: weitere Ausführungsbeispiele, als Varianten zum bevorzugten Ausführungsbeispiel aus FIG.9A-9D;
- FIG.14-16:: weitere Ausführungsbeispiele von Hülleinheiten;
- FIG.17:: eine Abwandlung eines Funktionsbereichs als Veschluss oder Befestigung; und
- FIG.18A-18C:: diverse Anordnungen mit Stützketten.

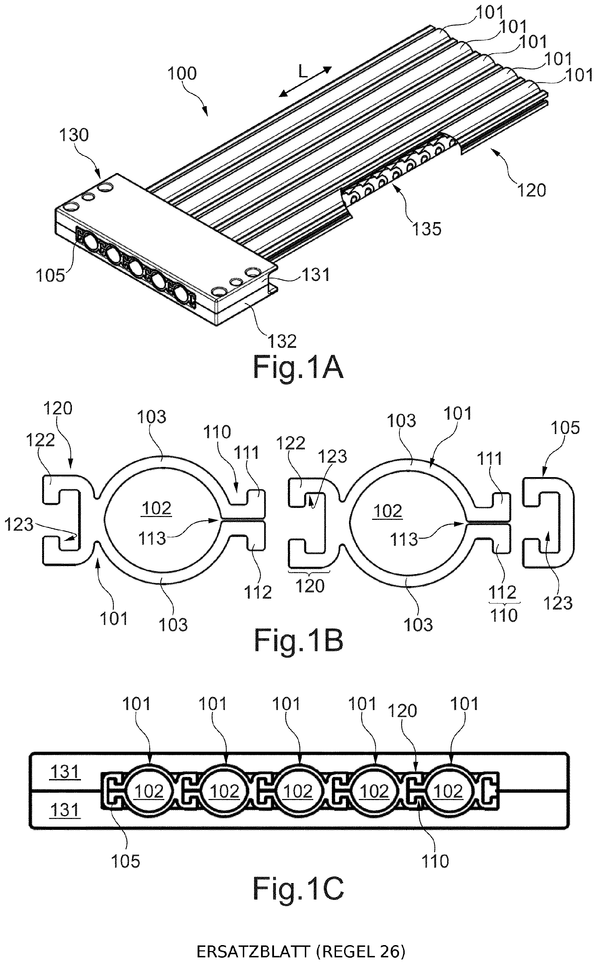

FIG.1A-1C zeigen schematisch ein erstes Ausführungsbeispiel einer hin und her verfahrbaren Leitungsschutzführung für Leitungen (nicht gezeigt). Diese hat eine langgestreckte, flexible Umhüllung 100, die aus einer Mehrzahl einzelner aus Kunststoff hergestellter Hülleinheiten 101 zusammengesetzt ist. Jede Hülleinheit 101 ist aus biegsamen weichelastischem Kunststoff, insbesondere einem Thermoplast, z.B. PE, PU, TPU, PTFE, expandiertes PTFE, PP oder dgl., hergestellt. Jede Hülleinheit 101 hat über ihre Länge einen durchgehend gleichbleibenden Querschnitt (FIG.1B) senkrecht zur Längsrichtung L. Die Hülleinheit 101 kann z.B. preiswert als Strangware in geeigneter Kunststoff-Extrusionstechnik hergestellt und auf eine geeignete Länge, z.B. von ca. 100mmm bis ca. 1500mm, abgelängt werden. Die baugleichen Hülleinheiten 101 bilden im Inneren eine im Wesentlichen zylindrische Aufnahme 102, zum geschützten Führen einer Leitung, und sind dazu rohrförmig mit im Verhältnis zum Querschnitt der Aufnahme 102 dünnwandigen Wandbereichen 103 ausgeführt. Die Aufnahmen 102 der flexiblen Umhüllung 100 sind räumlich voneinander getrennt, sodass kein Abrieb zwischen parallel darin geführten Leitungen entstehen kann.

Jede Hülleinheit 101 hat an einer Längsseite einen ersten Funktionsbereich 110, der in FIG.1A-1C aus zwei spiegelsymmetrisch konjugierten und getrennt gegenüberliegenden Verschlussprofilen 111, 112 besteht, die in Anlage gemeinsam einen Querschnitt etwa in T-Form bilden. Jedes Verschlussprofil 111, 112 ist in Längsrichtung L durchgehend und hier bspw. im Querschnitt etwa L-förmig. Die Verschlussprofile 111, 112 können, wie hier gezeigt, voneinander wegweisende L-Schenkel oder parallel nebeneinander bzw. ineinander liegende L-Schenkel bilden, zur Reduzierung der Höhe des Verschlusses. Zwischen den Verschlussprofilen 111, 112, insbesondere mittig dazwischen, weist die Hülleinheit 101 eine Schnittstelle bzw. in Längsrichtung L und radial durchgehende Öffnung 113 auf. Die spaltförmige Öffnung 113 einer losen bzw. abgetrennten Hülleinheit 101 (FIG.1B) kann durch Aufbiegen der Hülleinheit 101 geweitet werden, um eine mit Steckern vorkonfektionierte Leitung seitlich bzw. quer zur Längsrichtung L in die Aufnahme 102 einzufügen oder aus dieser zu entnehmen.

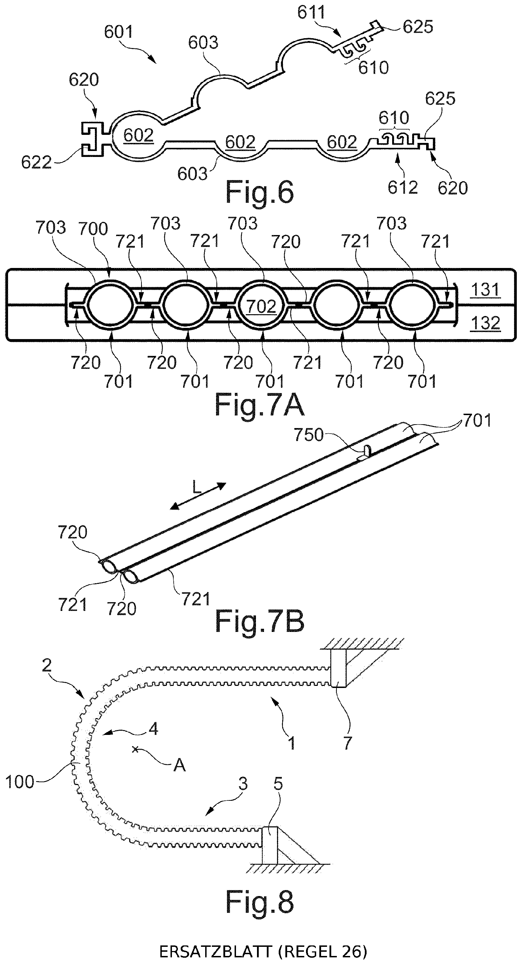

Die Hülleinheit 101 hat, diametral dem ersten Funktionsbereich 110 gegenüberliegend, einen zweiten Funktionsbereich 120 der aus einem Befestigungsprofil 122 besteht. Das Befestigungsprofil 122 ist in Längsrichtung L durchgehend und hat bspw. einen im Wesentlichen C-förmigen Querschnitt mit einer Innenkontur 123, die passend zur Außenkontur der geschlossenen Verschlussprofile 101, 112 des ersten Funktionsbereichs 110, insbesondere mit leichtem Untermaß für eine form- und kraftschlüssige Verbindung dimensioniert ist. Durch axiales Aufschieben des Befestigungsprofils 122 auf die Verschlussprofile 111, 112 einer benachbarten Hülleinheit 101 kann deren Öffnung 113 zumindest weitgehend partikeldicht verschlossen werden und zum Austausch einer Leitung leicht wieder geöffnet werden. Die Funktionsbereiche 110, 120 definieren, hier zusammen mit der Öffnung 113, durch ihre Symmetrie-Längsschnittebene die neutrale Faser der biegsamen Umhüllung 100, d.h. die Längsschnittebene, deren Länge bei Biegung bzw. im Umlenkbogen 4 (FIG.8) nicht verändert, d.h. keine Zug-/Schubspannung aufweist. Zudem wird durch die zusätzliche Wandstärke an den Funktionsbereichen 110, 120 eine vergleichsweise stabile und kontrollierter verfahrende Umhüllung 100 erzielt, ohne deren reversible Biegsamkeit spürbar zu beeinträchtigen.

FIG.1A und FIG.1C zeigen weiterhin eine von zwei endseitigen Klemmvorrichtungen 130 mit zwei Klemmteilen 131, 132, zwischen denen alle Hülleinheiten 101 der Umhüllung 100 mitsamt darin geführter Leitungen (nicht gezeigt) endseitig und in Axialrichtung staubdicht abgeschlossen sind, z.B. durch Spannschrauben. Die Klemmvorrichtungen 130 können zugleich eine Zugentlastung der Leitungen (nicht gezeigt) erzielen und in an sich bekannter Bauweise, z.B. ähnlich der hier insoweit einbezogenen Lehre aus DE 10 2012 100 290 B4, ausgeführt sein.

FIG.1A zeigt eine von zwei Stützketten 135 die in den Aufnahmen 102 der beiden seitlich äußeren Hülleinheiten 101 aufgenommen ist und aus einzelnen Kettengliedern besteht. Optionale Stützketten 135 können einerseits zum Schutz gegen Knicken den minimal zulässigen Radius des Umlenkbogens 4 (FIG.8) vorgeben und andererseits durch Anschlagen der Kettenglieder in Strecklage die freitragende Länge der Umhüllung 100 im beweglichen Trum, z.B. im Obertrum 1 (FIG.8), vergrößern.

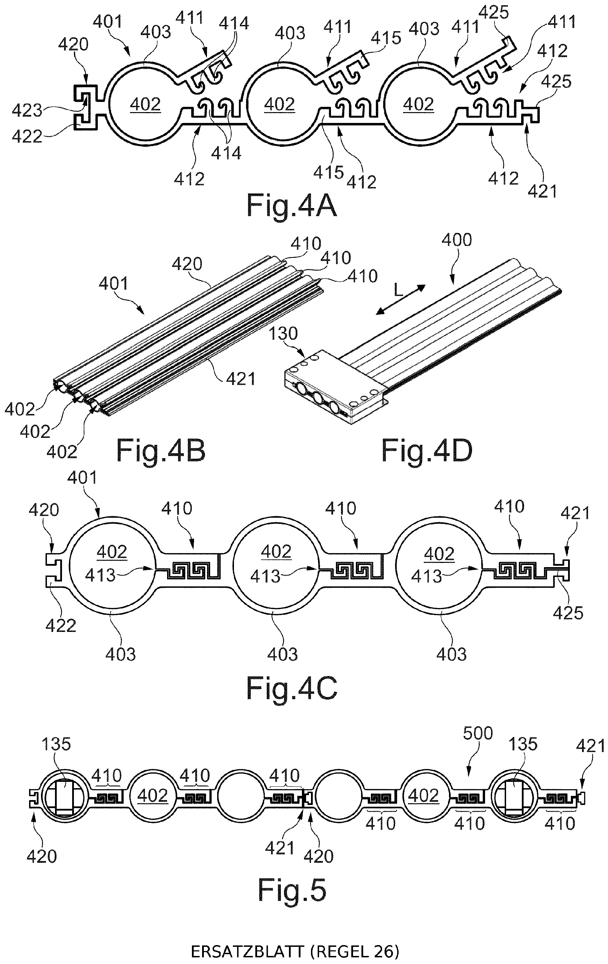

Wie in FIG.1B verdeutlicht, sind die gegenüberliegenden Verschlussprofile 111, 112 einteilig mit den rohrsegmentartigen Wandbereichen 103 der Hülleinheit 101 verbunden. Das Befestigungsprofil 122 ist ebenfalls einteilig mit dem oberen Wandbereich 103 und mit dem unteren Wandbereich 103 verbunden. Insbesondere die Verschlussprofile 111, 112 können, alternativ zu einer kostensparenden materialeinheitlichen Herstellung in einem Stück, separat aus einem geeigneten Kunststoff hergestellt sein und stoffschlüssig mit Wandbereichen 103 bzw. den Hülleinheiten 101 zu einem Werkstoffverbund verbunden werden, vorzugsweise durch Kunststoff-Schweißen. Der Querschnitt der Hülleinheiten 101 bzw. Wandbereiche 103 kann neben der gezeigten etwa kreisrunden Form auch eine länglich runde oder ovale Form haben. Die gezeigten Querschnittsformen der Verschlussprofile 111, 112 und des Befestigungsprofils 122 sind rein beispielhaft und können andersartig, bspw. überwiegend gerundet ausgeführt sein. Auch die Anzahl der parallel gekoppelten Hülleinheiten 101 nach FIG.1A-1C ist passend zur Anzahl gewünschter Leitungen beliebig wählbar bzw. dank der Funktionsbereiche 110, 120 nachträglich erweiterbar. Die Verschlussprofile 111, 112 können innenseitig zur Öffnung zusätzlich (hier nicht gezeigt) als Druckverschluss, z.B. nach dem Ziploc^{®} Prinzip, oder ähnlich ausgeführt sein um unerwünschtes Weiten der Öffnung 113 nach Abtrennen der benachbarten Hülleinheit 101 zu vermeiden (vgl. auch FIG.4A-4D).

FIG.1A-1C zeigen ferner eine Abschlussleiste 105 mit einer Innenkontur entsprechend dem Befestigungsprofil 122. Die Abschlussleiste 105 dient zum (bzgl. Austritt von Abriebpartikeln) dichten Verschließen der Öffnung 113 bzw. an einer Außenseite liegenden Verschlussprofile 111, 112 einer seitlich äußeren Hülleinheit 101, analog dem Befestigungsprofil 122.

FIG.1C veranschaulicht den vollständig geschlossenen Betriebszustand der Umhüllung 100, in welchem alle Befestigungsprofile 122 formschlüssig und/oder durch Kraftschluss, z.B. Klemmwirkung, mit den gegenüberliegenden und geschlossenen Verschlussprofilen 111, 112 verbunden sind und die zwischenliegende Öffnung 113 in Längsrichtung L durchgehend und staubdicht verschließen.

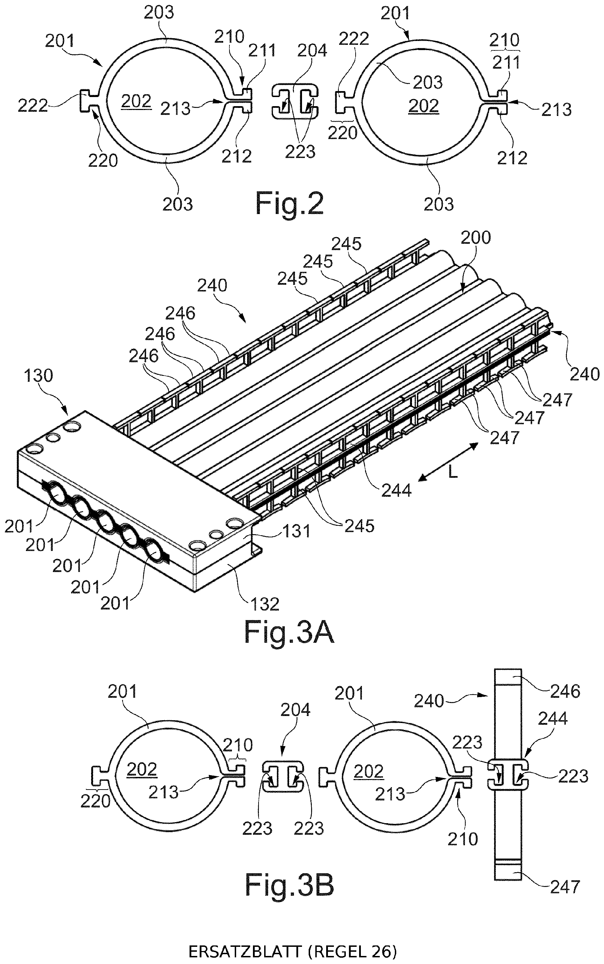

Merkmale mit zu FIG.1 entsprechender bzw. identischer Struktur oder Funktion haben in FIG.2-7 entsprechende Bezugszeichen und werden ggf. nicht wiederholt beschrieben.

Die Ausführungsformen gemäß Fig. 2, 3A und 3B fallen nicht unter den Wortlaut der Ansprüche, werden aber als das Verständnis der Erfindung erleichternd angesehen. FIG.2 zeigt eine nicht unter den Schutzumfang des Anspruchs fallende alternative Hülleinheit 201 mit zwei Funktionsbereichen 210, 220 zum Aufbau einer Umhüllung (FIG.1A-1C). Die Hülleinheit 201 unterscheidet sich gegenüber FIG.1A-1C vor allem durch andere Querschnittsform des Befestigungsprofils 222 im zweiten Funktionsbereich 220. Das Befestigungsprofil 222 ist in FIG.2 als Positivform bzw. männliches Formschlussteil mit Querschnitt z.B. in T-form, bis auf die Schnittstelle bzw. Öffnung 213 und entsprechend dem Querschnitt des ersten Funktionsbereichs 210 ausgeführt. So hat die Hülleinheit 201 zu beiden Längsmittelebenen, in FIG.2 vertikal und horizontal, einen weitgehend symmetrischen Querschnitt, bis auf die einseitige Öffnung 213. Entsprechende Symmetrie ist für eine gleichmäßige, torsionsfreie Biegung im Umlenkbogen 4 (FIG.8) günstig. Alternativ könnte der zweite Funktionsbereich 220 identisch zum ersten Funktionsbereichs 210, d.h. vollsymmetrisch mit einer Öffnung 213 an beiden Seiten, herzustellen. Dabei würde die Hülleinheit 201 aus zwei baugleichen Halbschalen (nicht gezeigt) zusammengesetzt, die z.B. durch Spritzguss-Verfahren herstellbar sind.

Weiterhin ermöglicht die Hülleinheit 201 ein Abtrennen ohne Öffnen der benachbarten Hülleinheit 201. Dies wird durch Befestigung benachbarter Hülleinheiten 201 (FIG.1C) jeweils anhand einer nicht unter den Schutzumfang des Anspruchs fallenden separaten Befestigungsleiste 204 erreicht. Die Befestigungsleiste 204 hat symmetrischem, durchgehend gleichförmigen Querschnitt, z.B. in H-Form bzw. Doppel-C-Form. Die Befestigungsleiste 204 hat beidseitig eine zu beiden Funktionsbereichen 210, 220 passende Innenkontur 223, hier als Negativform bzw. weibliches Formschlussteil. Die Befestigungsleiste 204 kann durch Formschluss und/oder Kraftschluss zwei Hülleinheiten 201 lösbar verbinden, wie FIG.2 zeigt. Zugleich dient die Befestigungsleiste 204 mit dem Funktionsbereich 210 zusammen als Verschluss zum staubdichten Schließen der Öffnung 213 zwischen den Verschlussprofil 211, 212. Auch andere Querschnitte, insbesondere der Funktionsbereiche 210, 220 und der Befestigungsleiste 204, können das Prinzip aus FIG.2 geeignet verwirklichen.

FIG.3A-3B zeigen einen weiteren Vorteil der symmetrischen Bauweise der nicht unter den Schutzumfang des Anspruchs fallenden Hülleinheit 201 aus FIG.2. Seitlich an den äußeren Hülleinheiten 201, d.h. den Schmalseiten der Umhüllung 200, kann jeweils eine baugleiche Stützvorrichtung 240 zum Stützen und definierten Führen der Hülleinheiten an den Funktionsbereichen 210, 220 angebracht werden, wie FIG.3B veranschaulicht. Hierzu hat die Stützvorrichtung 240 ein Tragband 244 mit einem Querschnitt entsprechend der Befestigungsleiste 204, d.h. passend zum Querschnitt der Funktionsbereiche 210, 220, z.B. beidseitige Nuten mit Innenkontur 223.

Die Stützvorrichtung 240 ist ausgeführt um den Umlenkradius des Umlenkbogens 4 (FIG.8) vorzugeben und ein freitragendes Trum 1 in Strecklage zu stützen, bzw. die mögliche freitragende Länge des Trums 1 zu vergrößern. Hierzu hat die Stützvorrichtung 240 quer zur Längsrichtung L beidseitig mit dem Tragband 244 geformte und senkrecht dazu stehende T-förmige Anschlagelemente 245 mit in Längsrichtung L der Umhüllung 200 stehenden T-Armen 246, 247. Die oben/unteren bzw. inneren/äußeren T-Arme 246, 247 sind unterschiedlich lang dimensioniert, so dass die T-Arme 247 im Umlenkbogen 4 radial innen beim gewünschten Radius anschlagen bzw. die T-Arme 246 in Strecklage im Anschlag stehen. Das Tragband 244 liegt vorzugsweise, wie die Befestigungsleiste 204 auf Höhe der neutralen Faser der flexiblen Umhüllung 200. Die Befestigungsleiste 204 und die Stützvorrichtung 240 sind aus flexiblem, biegeelastischen Kunststoff(en) hergestellt. Sie reiben nicht an den Leitungen und können daher bedarfsweise höhere Biegesteifigkeit als die Hülleinheiten 201 aufweisen, bspw. zur Einhaltung eines Radius im Umlenkbogen 4 bzw. Vergrößerung der freitragenden Länge. Weitere Einzelheiten zur Gestaltung der Stützvorrichtung 240 können, bis auf die Formgebung des Tragbands 244, der Lehre aus WO 2008/125087 A1 entsprechen.

In FIG.1-2 bildet jede Hülleinheit 101; 201 jeweils genau eine Aufnahme 102; 202 für eine oder ggf. mehrere Leitungen. FIG.4-6 zeigen Ausführungsbeispiele in denen die Umhüllung 400 jeweils eine einteilige Hülleinheit 401; 601 mit Unterteilungen zur Bildung mehrerer paralleler Aufnahmen 402; 602 in derselben Hülleinheit 401; 601.

FIG.4-5 zeigen eine alternative, einteilige Hülleinheit 401 mit bspw. drei parallelen Aufnahmen 402, die jeweils einzeln geöffnet (FIG.4A) und geschlossen (FIG.4C) werden können, um Leitungen einzubringen bzw. zu tauschen. Die Hülleinheit 401 ist einteilig als flexibles Kunststoff-Profil mit in Längsrichtung L durchgehend gleichbleibendem Querschnitt, wie in FIG.4 veranschaulicht, ausgeführt. Es kann z.B. aus einem Stück durch Extrusion hergestellt werden. Herstellungstechnische und materialbezogene Vorteile können sich ergeben, wenn die Funktionsbereiche, insbesondere Verschlussprofile 411, 412, separat und ggf. aus besonders geeignetem anderen Kunststoff hergestellt sind und nachträglich einteilig mit den Wandbereichen verbunden werden. Auch ein Mehrkomponenten-Herstellungsverfahren ist denkbar.

Die Hülleinheit 401 hat an den Schmalseiten zwei beidseitig gegenüberliegende Funktionsbereiche 420, 421 mit denen benachbarte Hülleinheiten 401 parallel miteinander verbunden werden können, wie in FIG.5 veranschaulicht. Die Funktionsbereiche 420, 421 haben in FIG.4-5 mit der Hülleinheit 401 einteilige Befestigungsprofile 422, 425 aufweist die zum Form- und Kraftschluss mit konjugiert ineinandergreifendem Querschnitt ausgeführt sind, z.B. ähnlich FIG.1. Das Befestigungsprofil 425 an der zu öffnenden Seite ist zweiteilig mit zwischenliegender Schnittstelle, z.B. analog dem Funktionsbereich 110 aus FIG.1A-1C, ausgeführt, mit Außenkontur passend zur Innenkontur 423 des Befestigungsprofils 422. Alternativ ist nicht wie in der beanspruchten Erfindung auch eine Befestigung mittels separater Befestigungsleisten, analog zu FIG.2-3 möglich.

Wie FIG.4A näher zeigt, ist an einer Seite jeder der mehreren Aufnahmen 402 derselben Hülleinheit 401, jeweils ein Funktionsbereich 410 mit einem gegenüberliegenden Paar zusammenwirkender Verschlussprofile 411, 412 einteilig mit der Hülleinheit 401 verbunden. Die Verschlussprofile 411, 412 erstrecken sich ebenfalls in Längsrichtung L mit gleichbleibendem Querschnitt und dienen dem (bzgl. Partikelgröße) dichten Schließen der jeweils zugehörigen Aufnahme 402 (FIG.4C). Die Verschlussprofile 411, 412 können als Verschlussleiste, umfassend zumindest formschlüssig ineinandergreifende Profilelementen 414, z.B. mit Widerhakenform im Querschnitt, nach dem Prinzip eines geeigneten Druckverschlusses, oder dgl. ausgeführt sein. Stützbereiche 415 dienen dem formschlüssigen Verrasten der Profilelemente 414 im geschlossenen Zustand (FIG.4C). Anhand zugeordneter Verschlussprofile 411, 412 können die Aufnahmen 402 bedarfsweise einzeln geöffnet und dicht geschlossen werden. Öffnen kann durch Aufbiegen des flexiblen Wandbereichs 403 erfolgen. FIG.4-5 zeigen einen Funktionsbereich 410 der als robuster Doppelverschluss mit jeweils zwei Profilelementen 414 an jedem Verschlussprofil 411, 412 ausgeführt ist, z.B. um unerwünschtes Öffnen im Betrieb auszuschließen. Ungewolltes Öffnen lässt sich jedoch bereits vermeiden, wenn die zu öffnende Breitseite der Umhüllung 400 im Umlenkbogen 4 radial innen liegt. Die Schnittstelle der Öffnung 413 zwischen den Verschlussprofile 411, 412 ist auf Höhe der neutralen Faser angeordnet, vgl. FIG.4C.

FIG.5 zeigt eine Umhüllung 500 aus zwei Hülleinheiten 401, die anhand ihrer seitlichen Funktionsbereiche 420, 421 bzw. deren Befestigungsprofile 422, 425 lösbar und parallel aneinander befestigt sind. In den beiden seitlich äußeren Aufnahmen 402 kann, z.B. bei einer großen Länge, jeweils eine Stützkette 135, wie zu FIG.1A beschrieben, angeordnet sein.

FIG.6 zeigt eine Variante zu FIG.4-5 mit einer Hülleinheit 601 welche für alle Aufnahmen 602 gemeinsam lediglich einen Verschluss hat. Dazu ist nur ein Funktionsbereich 610 mit zusammenwirkenden Verschlussprofilen 611, 612 an einer Schmalseite vorgesehen. Die Wandbereiche 603 sind an beiden Breitseiten der Hülleinheit 601 plattenartig zusammenhängend ausgeführt. Ansonsten entspricht die Hülleinheit 601 der Hülleinheit 401.

FIG.7A-7B zeigen ein weiteres bevorzugtes Ausführungsbeispiel einer Umhüllung 700, die aus einer Mehrzahl einzelner, baugleicher Hülleinheiten 701 aufgebaut ist, die jeweils genau eine Aufnahme 702 bilden. Im Gegensatz zu FIG.1-6 sind die Hülleinheiten 701 in Längsrichtung L und in Umfangsrichtung geschlossen, d.h. mit unterbrechungsfrei um die Aufnahme 702 umlaufender Hüllwand 703 ausgeführt. Die Hüllwand 703 ist bspw. in Rohrform, Schlauchform oder dgl. mit etwa ovalem oder rundem Querschnitt ausgeführt. Die Hülleinheiten 701 sind zumindest überwiegend aus flexiblem, dauerelastisch biegsamen Kunststoff hergestellt.

Die Hülleinheiten 701 können nicht zerstörungsfrei geöffnet werden, d.h. Leitungen müssen, anders als bei FIG.1-6, axial bzw. in Längsrichtung durchgeführt werden. Ein ungewolltes Austreten von Partikeln während Wartungsarbeiten kann dadurch vermieden werden. Eine Vereinfachung der Wartung und Erweiterbarkeit wird mit den Hülleinheiten 701, ohne Verschlussfunktion an den Aufnahmen 702, allein durch das Konzept der Befestigungsfunktion bzw. nur zur parallelen Befestigung einzelner Hülleinheiten 701 zusammenwirkende Funktionsbereiche 720, 721 erzielt.

Jede Hülleinheit 701 nach FIG.7A-7B hat beidseitig diametral gegenüberliegend mit der geschlossenen Hüllwand 703 hergestellte oder nachträglich mit dieser verbundene und in Längsrichtung L erstreckte Funktionsbereiche 720, 721. Die Funktionsbereiche 720, 721 weisen jeweils als Befestigungsband ein Befestigungsprofil oder eine Befestigungsleiste für eine lösbare Verbindung durch Formschluss und/oder Kraftschluss auf. Die Funktionsbereiche 720, 721 sind zusammenwirkend ausgeführt, zum bedarfsweise Lösen bzw. Anbringen einer Hülleinheit 701 an bzw. von einer angrenzenden Hülleinheit 701. FIG.7B zeigt beispielhaft zwei verbundene Hülleinheiten 701 gezeigt. Es können z.B. Befestigungsprofile als Funktionsbereiche 720, 721 verwendet werden, die in Längsrichtung L gleichbleibenden Querschnitt haben, um eine Extrusion zu ermöglichen. Die Funktionsbereiche 720, 721 verlaufen auch hier bandförmig in einer Ebene gegenüberliegend an zwei Seiten entlang der Hüllwand 703. Die Befestigungsbänder der Funktionsbereiche 720, 721 können in Art eines verzahnten Reißverschlusses, eines zahnlosen Gleitverschlusses oder dgl. ausgeführt sein. Die Funktionsbereiche 720, 721 wirken zur Befestigung zusammen ggf. auch mit einer separaten Befestigungsleiste, wie in FIG.2, welche die Befestigungsprofile bzw. Befestigungsleiste verbindet. FIG.7B zeigt schematisch einen Verschluss-Schieber 750 zum Verbinden/Trennen Veranschaulichung von Funktionsbereichen 720, 721 die zur Befestigung der Hülleinheiten 701, rein beispielhaft, z.B. als formschlüssiger, zahnloser Gleitverschluss ausgeführt sind. Die Funktionsbereiche 720, 721 können separat, z.B. durch Extrusion oder Spritzguss hergestellt und einteilig mit dem restlichen Profil der Hülleinheit 701 verbunden werden, z.B. in geeigneter Technik in Längsrichtung durchgehend angeschweißt werden. Bevorzugt sind dazu die Hüllwand 703 und die Funktionsbereiche 720, 721 aus einem Thermoplast hergestellt.

Benachbarte Führungskanäle bzw. Aufnahmen 102... 902 sind im Ergebnis durch bandartige Zwischenbereiche aneinander befestigt, welche zumindest an einigen Aufnahmen 102... 902 einen Funktionsbereich aufweisen, der die Wartung vereinfacht und/oder eine nachträglich Veränderung der Umhüllung erleichtert.

Die biegeelastischen Hülleinheiten 101... 901 können materialeinheitlich aus nur einem Kunststoff hergestellt sein, insbesondere mehrteilig aus separaten Bereichen die anschließend stoffschlüssig verbunden, insbesondere mitaneinander verschweißt, werden. Die Hülleinheiten 101... 901 können ggf. mehrlagig bzw. mit Beschichtung, z.B. mit einem äußeren Spezialkunststoff zur Reibungsverringerung an den Breitseiten, hergestellt sein.

FIG.8 zeigt schematisch einen Verlauf einer dynamischen Leitungsführung mit staubdichter Umhüllung 100, z.B. nach einer der FIG.1-7, die ein bewegliches Obertrum 1 und ein stationäres Untertrum 3 bildet. Dazwischen bildet die Umhüllung 100 einen Umlenkbogen 4 mit vorgegebenem Biegeradius um eine gedachte Achse A. Der Umlenkbogen 4 verfährt über eine Strecke relativ zu einem feststehenden Anschluss 5 wenn der Obertrum 1 mit dem beweglichen Anschluss 7 verfahren wird. Die Raumlage ist jedoch beliebig, die Umhüllung 100 kann auch vertikal oder seitlich verfahren. Die beiden Enden der Umhüllung 100 sind mit staubdicht verschlossen, z.B. mit Klemmvorrichtungen nach FIG.1A. Die Umhüllung 100 ist insgesamt schlauchartig und ausreichend flexibel ausgeführt, u.a. durch geeignete Gestaltung und/oder Materialwahl, um eine reversibel biegsame Krümmung des Umlenkbogens 4 mit geringem Kraftaufwand zu erlauben und der Fahrbewegung des beweglichen Anschluss 7 mit möglichst geringem Widerstand zu folgen.

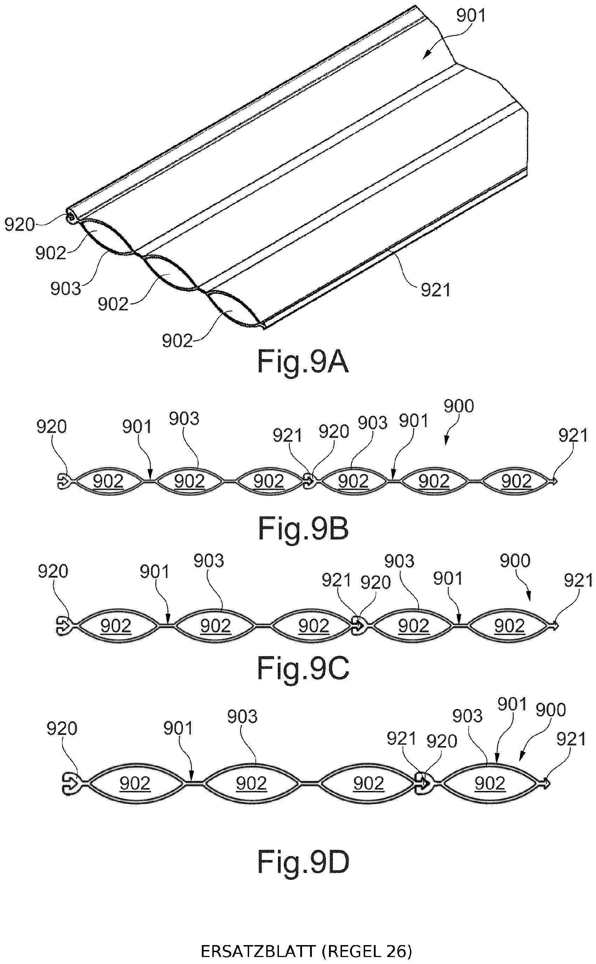

FIG.9A-9D zeigen schematisch eine Umhüllung 900, die aus einer Mehrzahl einzelner Hülleinheiten 901 aufgebaut ist. Die Hülleinheiten 901 bilden jeweils eine oder mehrere Aufnahmen 902. Im Gegensatz zu FIG.1-6 sind die Hülleinheiten 901 in Längsrichtung L und in Umfangsrichtung geschlossen, d.h. mit unterbrechungsfrei um die eine oder mehrere Aufnahmen 902 umlaufender Hüllwand 903 ausgeführt. Die Hüllwand 903 ist bspw. in Rohrform, Schlauchform oder dgl. mit etwa linsenförmigem (Engl. lens-shaped) bzw. spitzovalem (Engl. vesica piscis / double-pointed oval), oder auch ovalem, langrundem oder rundem Querschnitt ausgeführt. Bevorzugt wird der linsenförmige Querschnitt nach FIG.9A-9D zur Gestaltung der Aufnahmen 902 verwendet. Dieser kann insbesondere aus zwei gleichen Kreissegmenten gebildet sein, welche an ihren Sehnen symmetrisch zur neutralen Faser zusammengesetzt sind. Diese Querschnittsform mindert Faltenbildung d.h. Abrieb im Umlenkbogen. Die Hülleinheiten 901 sind zumindest überwiegend aus flexiblem, dauerelastisch biegsamen Kunststoff hergestellt, insbesondere extrudiert, z.B. aus expandiertem PTFE.

Hülleinheiten 901 nach FIG.9A-9D können nicht zerstörungsfrei geöffnet werden, d.h. Leitungen müssen, anders als bei FIG.1-6, axial bzw. in Längsrichtung durchgeführt werden. Ein ungewolltes Austreten von Partikeln während Wartungsarbeiten kann dadurch aber zuverlässig vermieden werden. Eine Vereinfachung der Wartung und Erweiterbarkeit wird mit den Hülleinheiten 901, ohne Verschlussfunktion an den Aufnahmen 902, allein durch das Konzept der Befestigungsfunktion bzw. die zur parallelen Befestigung einzelner Hülleinheiten 901 zusammenwirkenden Funktionsbereiche 920, 921 erzielt. Hierbei kann jede Hülleinheit 901 z.B. einen zusammengehörenden Leitungsstrang aufweisen, um ein mit Steckern oder dgl. vorkonfektionierten Leitungsstrang unabhängig von einem abweichenden Leitungsstrang mittels Austausch einer Hülleinheit 901 zu erneuern.

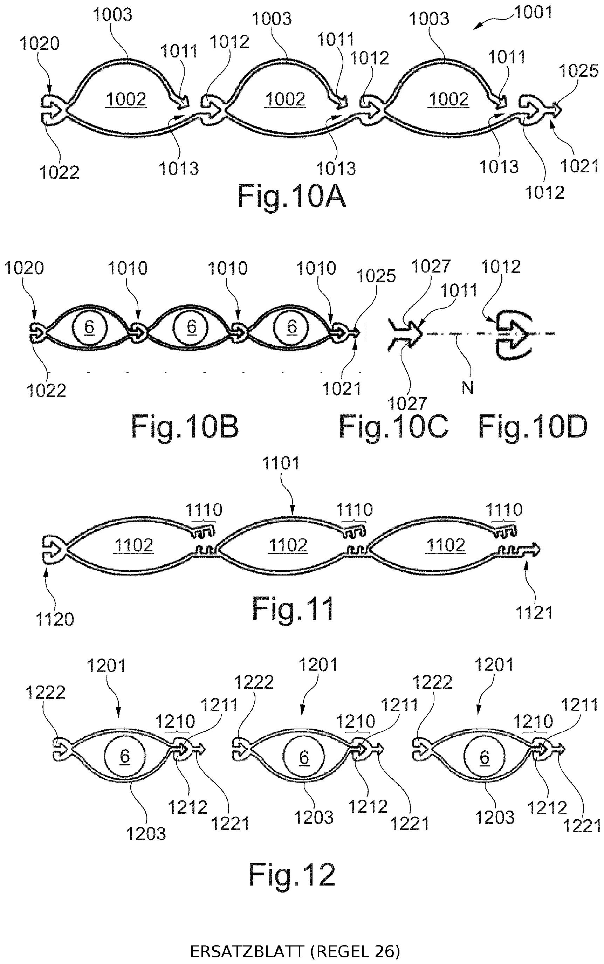

Jede Hülleinheit 901 nach FIG.9A-9D hat beidseitig diametral gegenüberliegende und mit der geschlossenen Hüllwand 903 entweder einteilig hergestellte oder nachträglich mit dieser verbundene und in Längsrichtung L durchgehend erstreckte Funktionsbereiche 920, 921. Die Funktionsbereiche 920, 921 weisen jeweils als Befestigungsband ein Befestigungsprofil und/oder eine Befestigungsleiste für eine lösbare Verbindung durch Formschluss und/oder Kraftschluss auf. Die Funktionsbereiche 920, 921 sind zusammenwirkend ausgeführt, zum bedarfsweise Lösen bzw. Anbringen einer Hülleinheit 901 an bzw. von einer angrenzenden Hülleinheit 901. Eine geeignete Bauweise wird zu FIG.10A-10D unten erläutert.

FIG.9B-9D zeigen beispielhaft zwei verbundene Hülleinheiten 901, wobei eine erste Hülleinheit 901 drei Aufnahmen 902 bildet. In FIG.9B weist eine zweite Hülleinheit 901 ebenfalls drei Aufnahmen 902 auf. In FIG.9C weist die zweite Hülleinheit 901 zwei Aufnahmen 902 und in FIG.9D eine Aufnahme 902 auf. Durch verschiedene Anzahl von Aufnahmen 902, welche von einer Hülleinheit 901 gebildet werden, wird eine Anpassung einer Hülleinheit 901 an einen Leitungsstrang (nicht abgebildet) möglich, insbesondere an die Anzahl der Leitungen (nicht abgebildet) innerhalb eines Leitungsstrangs (nicht abgebildet). So wird durch eine bedarfsgerechte Konfiguration von Hülleinheiten 901 mit angepasster Anzahl von Aufnahmen 902 innerhalb einer Umhüllung 900 ermöglicht, dass ein einzelner Leitungsstrang (nicht abgebildet) bedarfsgerecht durch den Austausch einer Hülleinheit 901 ausgetauscht werden kann.

Es können z.B. Befestigungsprofile als Funktionsbereiche 920, 921 verwendet werden, die in Längsrichtung L gleichbleibenden Querschnitt haben, um eine Extrusion zu ermöglichen. Die Funktionsbereiche 920, 921 verlaufen auch hier bandförmig in einer Ebene gegenüberliegend an zwei Seiten entlang der Hüllwand 903. Die Befestigungsbänder der Funktionsbereiche 920, 921 sind in Art eines Verschlusses mit ineinandergreifenden Befestigungsprofilen, ähnlich z.B. Druckverschlussbeuteln oder vorzugsweise Ziehverschlussbeuteln, ausgeführt. Die Funktionsbereiche 920, 921 wirken hier zur Befestigung zusammen ggf. nicht wie in der beanspruchten Erfindung auch mit einer separaten Befestigungsleiste, wie in FIG.2, welche die Befestigungsprofile bzw. Befestigungsleiste verbindet.

Bevorzugt werden die Funktionsbereiche 920, 921 einstückig mit den Hüllwänden 903 im Extrusionsverfahren hergestellt, entweder materialeinheitlich oder aus verschiedenen Kunststoffen, z.B. mit einem flexiblen aber festerem bzw. härterem Kunststoff für die Funktionsbereiche 920, 921. Die Funktionsbereiche 920, 921 können separat, z.B. durch Extrusion oder Spritzguss hergestellt und einteilig mit dem restlichen Profil der Hülleinheit 901 verbunden werden, z.B. in geeigneter Technik in Längsrichtung durchgehend angeschweißt werden. Bevorzugt sind dazu die Hüllwand 903 und die Funktionsbereiche 920, 921 aus einem Thermoplast hergestellt.

FIG.10A-10D zeigen ein besonders bevorzugtes weiteres Beispiel einer Hülleinheit 1001, welche eine Variante des Prinzips aus FIG.4A-4D darstellt. Die Hülleinheit 1001 ist auch hier aus flexiblem biegsamen Kunststoff hergestellt, vorzugsweise extrudiert und hat mehrere, z.B. drei Aufnahmen 1002 für Leitungen 6 im geschlossenen Zustand (FIG.10B). Dabei hat die Hülleinheit 1001 für jede Aufnahme 1002 eine jeweils eigene bzw. zugeordneten 1010 Funktionsbereich, der als Verschluss ausgeführt ist, hier insbesondere als bandartige Verschlussleiste mit zwei konjugiert ineinandergreifenden Verschlussprofilen bzw. Eingriffsprofilen, nämlich einem Hakenprofil 1011, das in ein Klauenprofil 1012 eingreifen kann. Das Hakenprofil 1011 und das Klauenprofil 1012 sind jeweils mit mindestens einer Hinterschneidung, vorzugweise zwei symmetrischen Hinterschneidungen versehen und greifen mit Widerhaken-Funktion ineinander, d.h. sind relativ leicht zu schließen bzw. verbinden aber nur mit deutlich höherem Kraftaufwand zu lösen.

Weiterhin hat die Hülleinheit 1001 an beiden gegenüberliegenden Schmalseiten ebenfalls jeweils einen Funktionsbereich 1020 bzw. 1021 der zur modularen Befestigung mehrerer Hülleinheiten 1001 mit entsprechend baugleichen Funktionsbereichen 1020 bzw. 1021 in einer Lage seitlich nebeneinander oder an einer Stützvorrichtung (vgl. FIG.3A) dient. Die Befestigungsbänder bzw. -streifen 1020, 1021 sind hier ebenfalls als Klauenprofil 1022 bzw. Hakenprofil 1025 ähnlich oder baugleich den Verschluss-Funktionsbereichen 1010 ausgeführt.

FIG.10C-10D zeigen schematische vergrößerte Querschnittsdarstellungen des Hakenprofils 1011 bzw. des Klauenprofils 1012, welche baugleich auch für die Verschluss-Funktionsbereiche 1020 bzw. 1021 verwendbar sind. Das Hakenprofil 1011 und das Klauenprofil 1012 haben in Längsrichtung (senkrecht zur Ebene der FIG.10C-10D) durchgehend gleichbleibenden Querschnitt und sind als flexible Streifen bzw. Bänder ausgeführt, die im Umlenkbogen 4 (FIG.4) um die Achse A biegsam sind. Das Hakenprofil 1011 ist bzgl. der neutralen Faser N als symmetrisches Doppelhaken-Profil ausgeführt, z.B. wie hier gezeigt in Pfeilkopf-Form, Pilzkopf-Form oder dgl. und weist jeweils entsprechende rückseitige Hinterschneidungen bzw. Hinterschnitte auf. Die Rückseiten 1027 können gegenüber der Symmetrieebene und der Verbidungsrichtung schräg in einem Winkel nach hinten verlaufen, um die Wirkung als Widerhaken zu verstärken bzw. ungewolltes Lösen zuverlässig zu vermeiden. Das Klauenprofil 1012 ist entsprechend im Querschnitt symmetrisch zur neutralen Faser N. Das Klauenprofil 1012 hat eine innere Aufnahme passend bzw. konjugiert zum Hakenprofil 1011 mit passendem Querschnitt und Hinterschneidungen, wobei die Aufnahme mit Untermaß ausgeführt sein kann um Kraftschluss zu erzielen. Um diese Aufnahme bildet das Klauenprofil 1012 zwei klauenartige Leisten bzw. Streifen, welche wie ein Fangmaul das Hakenprofil 1011 hintergreifen und festhalten. Auch andere Bauformen eines Hakenprofils 1011 bzw. eines Klauenprofils 1012 insbesondere wie bei zahnlosen Reißverschlüssen, insbesondere Zieh-, Gleit- oder Druckverschlüssen, aus Kunststoff bekannt kommen in Betracht. Die vorstehende Bauweise ist sinngemäß für die Befestigungs-Funktionsbereiche 1020, 1021 anwendbar. Bevorzugt werden Reißverschlüsse 1010 bzw. 1020, 1021 mit ineinandergreifenden Teilen, die einen im Wesentlichen gleichmäßigen Querschnitt über ihre gesamte Länge aufweisen und ohne Schieber bedient werden, da diese Bauform einfach im Extrusionsverfahren realisierbar ist. Es kann auch ein geeigneter Schieber als Werkzeug bzw. Hilfe zum Öffnen oder Schließen vorgesehen sein.

Eine Anordnung der Verschluss-Funktionsbereiche 1010 und Befestigungs-Funktionsbereiche 1020 bzw. 1021 auf Höhe der neutralen Faser N wie in FIG.10A-10D ist besonders vorteilhaft. Die neutrale Faser N, auch Nulllinie genannt, ist die Schicht des Querschnitts, deren Länge sich bei Biegung, insbesondere beim Verfahren des Umlenkbogens 4 (FIG.8) nicht ändert, d.h. die bei Krümmung eine konstante Abmessung in Längsrichtung erhaltende Schicht.

Wie aus FIG.10C-10D besonders gut ersichtlich, sind die Befestigungs-Funktionsbereiche 1020 bzw. 1021 in einer Verbindungsrichtung V, welche senkrecht zur Längsrichtung L liegt relativ leicht miteinander verbindbar, wobei die Verbindungsrichtung V hierbei im Wesentlichen in der Ebene der neutralen Faser N liegen kann. Entgegen der Richtung V sind die Befestigungs-Funktionsbereiche 1020 bzw. 1021 jedoch nur sehr schwer lösbar, sodass kein ungewolltes Lösen im Betrieb auftritt.

Die Verschluss-Funktionsbereiche 1010 und Befestigungs-Funktionsbereiche 1020 bzw. 1021 können materialeinheitlich mit den Wänden der Aufnahmen 1002 hergestellt sein oder aus einem vergleichsweise biegesteiferen Kunststoff z.B. im Koextrusionsverfahren, bspw. um die Stabilität der Verbindungen und der Hülleinheit 1001 insgesamt zu erhöhen.

FIG.11 zeigt eine Abwandlung mit einer Hülleinheit 1101, bei welcher die Befestigungs-Funktionsbereiche 1120 bzw. 1121 nach dem Prinzip aus FIG.10A-10D ausgeführt sind. Die Verschluss-Funktionsbereiche 1110 hingegen sind als Doppelhaken-Eingriffsprofile nach dem Prinzip aus FIG.4A-4C ausgeführt. Hierbei ist anzumerken, dass die Darstellung in FIG.4A-4C nicht maßstabgetreu ist, da die Verschluss-Funktionsbereiche 410 dort stark vergrößert dargestellt sind. Typisch weisen die Funktionsbereiche 1010, 1020 bzw. 1021 oder 1110, 1120 bzw. 1121 eine Bauhöhe im Querschnitt im Millimeterbereich, z.B. von ca. 1mm bis ca. 3mm auf.

FIG.12 zeigt wiederum eine Abwandlung gegenüber FIG.10A-10D mit dem wesentlichen Unterschied, dass jede Hülleinheit 1201 aus FIG.12 genau eine Aufnahme bildet, die einzeln öffenbar und verschließbar ist. Nebst einem entsprechenden Verschluss-Funktionsbereich 1210, mit Hakenprofil 1212 und Klauenprofil 1212 analog zu FIG.10A-10D, an jeder Aufnahme hat in FIG.12 jede einzelne Aufnahme auch beidseitig an jeder Schmalseite ein eigenes Befestigungsprofil, z.B. ein Klauenprofil 1222 bzw. ein Hakenprofil 1212.

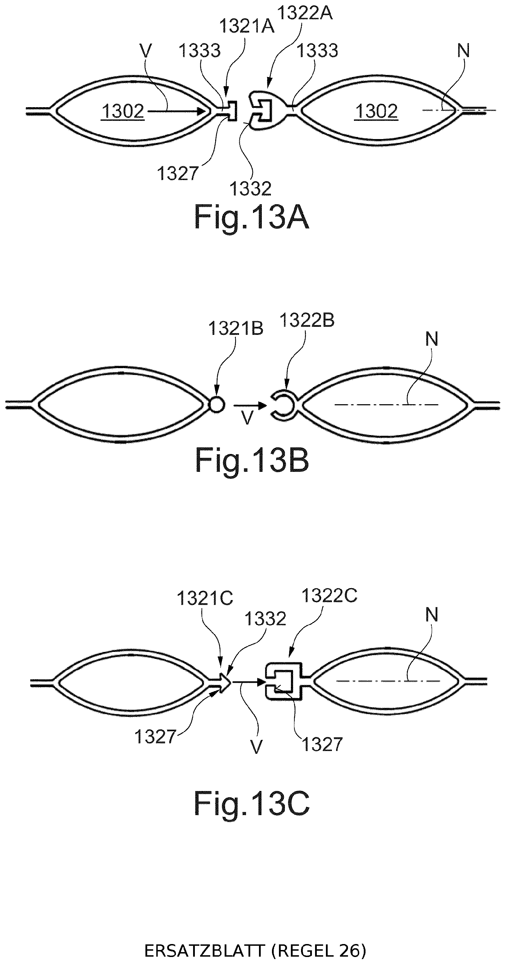

FIG.13A-13C zeigen in schematischer, vergrößerter Querschnittsdarstellung Varianten der Befestigungsbänder mit Hakenprofil 1021 bzw. Klauenprofil 1022 aus FIG.9A-9D bzw. wie in FIG.10C-10D veranschaulicht.

In FIG.13A ist das Hakenprofil 1321A im Querschnitt im wesentlichen T-förmig, mit abgeschrägten Rückseiten 1327 zur Erzielung einer Widerhakenfunktion. Nur das Klauenprofil 1322A, mit komplementär T-förmiger Aufnahme, hat in FIG.13A gegenüberliegende Einführschrägen 1332 symmetrisch zur Mittelebene, welche im Betrieb in etwa die neutrale Faser N bildet. Danke der Einführschrägen 1332 ist das Hakenprofil 1321A mit geringer Kraft in Verbindungsrichtung V mit dem Klauenprofil 1322A zu verbinden, jedoch in Gegenrichtung nur schwer lösbar. Wie in FIG.9A-9C sind auch in FIG.13A die einzelnen Befestigungsbänder über dünnere band- bzw. streifenförmige Zwischenbereiche 1333 mit den Wandungen der einzelnen Aufnahmen 1302 einteilig verbunden. Auch die ggf. mehreren Aufnahmen sind über solche Zwischenbereiche 1333 verbunden, wobei die Zwischenbereiche 1333 zu einer vorgegebenen Lage der neutralen Faser N beitragen. Die Verbindung der Befestigungsbänder bzw. von Hakenprofil 1321A und Klauenprofil 1322A ist hier kraft- und formschlüssig.

In FIG.13B ist das erste Befestigungsband im Wesentlichen als kreiszylindrische Rundleiste bzw. als Rundprofil 1321B ausgeführt, welches in Verbindungsrichtung V leicht mit dem konjugierten, C-förmigen und klammerartigem zweiten Befestigungsband 1322B verbindbar ist.

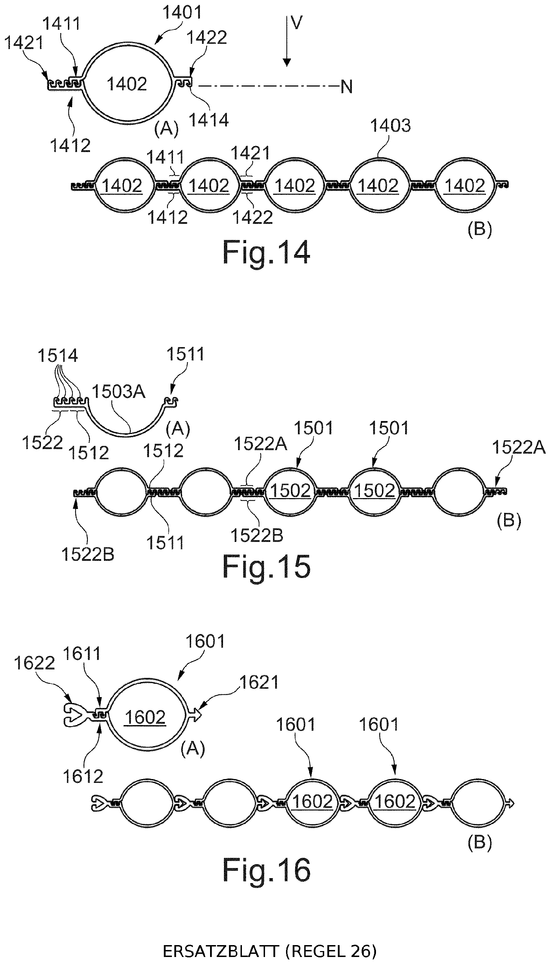

In FIG.13C ist das das Hakenprofil 1321C des ersten Befestigungsbands wie in FIG.9A-9D bzw. FIG.10C-10D gezeigt ausgeführt, wohingegen das Klauenprofil 1322C eine abweichende Formgebung zeigt, welche jedoch ebenfalls eine Widerhaken-Funktion anhand abgeschrägter Rückseiten 1327 erzeugt. In FIG.13C weist somit abweichend von FIG.9A-9D bzw. FIG.10C-10D lediglich eines der Befestigungsbänder, nämlich das Hakenprofil 1321C, symmetrische Einführschrägen 1332 auf. Ansonsten wirken die Befestigungsbänder entsprechend FIG.9A-9D bzw. FIG.10C-10D. Auch weitere Abwandlungen der Querschnittsformen der Befestigungsbänder sind möglich, wie auch FIG.14-15 zeigen.

FIG.14 zeigt eine Weiterbildung, mit Umhüllungen 1402 mit je nur einer Aufnahme 1402, bei welcher Verschlussprofile 1411, 1412 als Verschlussleisten vorgesehen sind, die zusammenwirkende formschlüssig ineinandergreifende Profilelemente 1414 aufweisen. Diese Profilelemente 1414 sind z.B. mit Widerhakenform im Querschnitt, nach dem Prinzip eines geeigneten Druckverschlusses oder dgl. ausgeführt sind, analog zu FIG.4A bzw. FIG.6. Anhand zugeordneter Verschlussprofile 1411, 1412 können die Aufnahmen 1402 auch hier bedarfsweise einzeln geöffnet und staubdicht geschlossen werden zum Austausch einer Leitung oder Stützkette. Die Verschlussprofile 1411, 1412 haben eine doppelte Verzahnungsleiste mit je zwei ineinandergreifenden parallelen Profilelementen 1414 für eine sichere, feste Verbindung im geschlossenen Zustand der Aufnahmen 1402 (FIG.14B). Weiterhin hat jede Umhüllung 1401 seitlich neben den Verschlussprofilen 1411, 1412 angeordnet und ebenfalls in Längsrichtung durchgehend mit gleichbleibendem Profil zwei zusammenwirkende Befestigungsbänder bzw. -Profile 1421, 1422. Die Befestigungsprofile 1421, 1422 haben hierbei dieselbe Bauform bzw. denselben Querschnitt wie die Verschlussprofile 1411, 1412. In dem Beispiel nach FIG.14A-14B kann die Hüllwand 1403 nach Öffnen der Verschlussprofile 1411, 1412 aufgebogen werden. Unabhängig hiervon können einzelne Umhüllung 1401 über die Befestigungsprofile 1421, 1422 miteinander verbunden oder voneinander gelöst werden. In Abweichung von FIG.9-10 und FIG.13 ist die Verbindungsrichtung V der Befestigungsprofile 1421, 1422 hier jedoch senkrecht zur neutralen Faser N gerichtet, liegt aber in der Ebene senkrecht zur Längsrichtung, wie FIG.14B veranschaulicht.

Als Variante zu FIG.14 zeigt FIG.15 eine im montierten Zustand vergleichbare Bauform, bei welcher jede Umhüllung 1501 aus zwei Halbschalen 1503A zusammengesetzt ist, welche jeweils zwei Verschlussprofile 1511, 1512 und nur ein Befestigungsprofil 1521 aufweisen. Zwei verbundene Halbschalen 1503A, wie in FIG.15B gezeigt sind jedoch wiederum über jeweils zwei seitliche, funktional getrennte Befestigungsbänder 1521A, 1521B aneinandergekoppelt.

In der Variante nach FIG.16 entsprechend die Verschlussprofile 1611, 1612 denjenigen aus FIG.14-15 bzw. FIG.4 oder FIG.6, die Befestigungsbänder 1621, 1622 hingegen haben das in Verbindungsrichtung steckbare Haken- und Klauenprofil aus FIG.9 bzw. FIG.10C-10D.

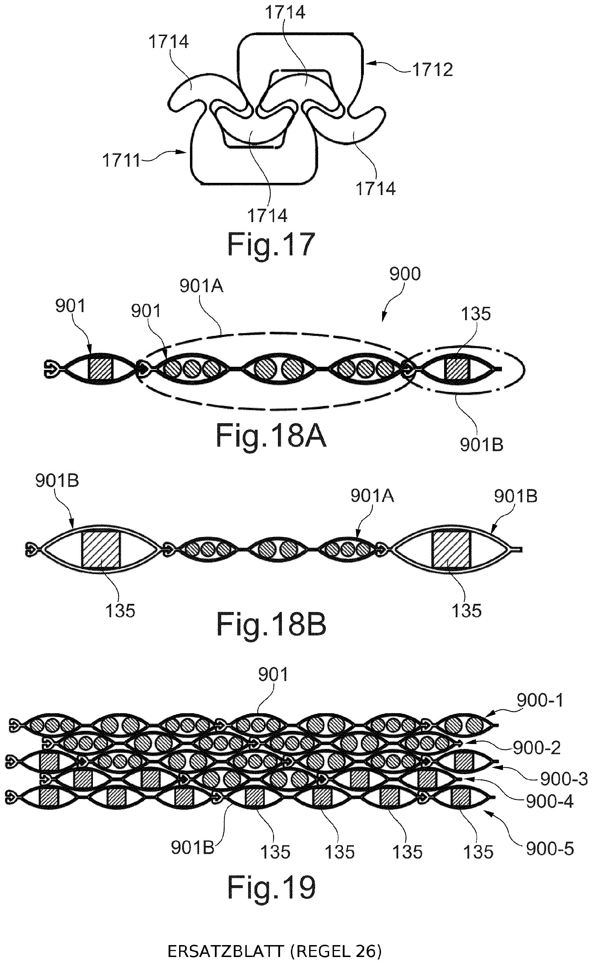

Als mögliche Weiterbildung, insbesondere der Verschlussprofile aus FIG.14-16 bzw. FIG.4 oder FIG.6, zeigt FIG.17 in vergrößertem Prinzipschema ein weiteres Funktionsprofil mit zusammenwirkenden Funktionsbereichen 1711, 1712 nach dem Prinzip eines geeigneten Druck- oder Ziehverschlusses. Hierbei sind die einzelnen Verschlussprofil-Elemente 1714 im Querschnitt identisch, jeweils mit spiegelsymmetrischer Pilzkopf- oder Doppel-T-Form oder dgl. ausgeführt und greifen als Doppelreihen ineinander bzw. hintereinander. Bei einer derartigen Ausführung sind gesonderte Stützbereiche 415 wie in FIG.4 nicht erforderlich. Die Funktionsbereiche 1711, 1712 aus FIG.17 können, wie z.B. in FIG.14-15, auch als Befestigungsprofile eingesetzt werden.

FIG.18A-18C zeigen diverse Anordnungen von Umhüllungen mit Hülleinheiten 901, z.B. analog zu FIG.9. In FIG.18A sind die beiden äusseren, seitlichen Hülleinheiten 901 eigens zwei schematisch gezeigten Stützketten 135 zugeordndet, sodass diese mit ihrer zugeordneten Umhüllung 901 separate austauschbar sind. Dies gilt auch für FIG.18B, wobei hier die zugeordneten Umhüllungen 901B, z.B. für robuster, grösser bauende Stützketten 135, einen vergleichsweise grösseren freien Querschnitt haben als die leitungsführende Umhüllung 901A.

FIG.19 veranschaulicht einen mehrlagigen Aufbau mit mehreren Umhüllungen 900-1... 900-5, in welchen erfindungsgemäße Hülleinheiten 900 z.B. nach FIG.9A-9D verwendet werden, wobei einige Umhüllungen 901B gesondert für Stützketten 135 vorgesehen sind z.B. in der unteren, im Umlenkbogen inneren Lage 900-5.

## Patentansprüche

1. **Hülleinheit** (901; 1201; 1401; 1601) aus Kunststoff für eine längliche flexible Umhüllung einer Leitungsschutzführung für eine Reinraumanwendung, wobei die Hülleinheit (901; 1201; 1401; 1601) mindestens eine Aufnahme (902; 1402; 1602) zur Führung mindestens einer Leitung (6) bildet, welche sich kanalartig in einer Längsrichtung (L) von einem ersten Ende zu einem zweiten Ende erstreckt;
wobei die Hülleinheit (901; 1401; 1601) an einer Längsseite ein erstes Befestigungsband (920; 1421; 1621) und an der anderen Längsseite ein zweites Befestigungsband (921; 1422; 1622) umfasst;
**dadurch gekennzeichnet, dass**
die Befestigungsbänder (920, 921; 1421, 1422; 1621, 1622) gegenüberliegend angeordnet und für eine lösbare Verbindung durch Formschluss und/oder Kraftschluss zueinander passend und in einer Fügerichtung (V) quer zur Längsrichtung (L) miteinander verbindbar ausgeführt sind um mehrere Hülleinheiten (901; 1401; 1601) mit zueinander passenden Befestigungsbändern (920, 921; 1421, 1422; 1621, 1622) durch Verbinden der Befestigungsbänder (920, 921; 1421, 1422; 1621, 1622) in Fügerichtung (V) quer zur Längsrichtung (L) lösbar aneinander zu befestigen, wobei das erste und das zweite Befestigungsband (920, 921; 1421, 1422; 1621, 1622) jeweils einteilig mit der Hülleinheit (901; 1401; 1601) ausgeführt ist.

2. **Hülleinheit** (901; 1401; 1601) nach Anspruch 1, **dadurch gekennzeichnet, dass** die Befestigungsbänder (920, 921; 1421, 1422; 1621, 1622) Befestigungsprofile sind.

3. Hülleinheit (901; 1401; 1601) nach Anspruch 2, **dadurch gekennzeichnet, dass** die Befestigungsprofile (920, 921; 1421, 1422; 1621, 1622) zueinander konjugiert und mit in Längsrichtung (L) durgehend gleichem Querschnitt ausgeführt sind, welche ineinandergreifend zusammenwirken.

4. Hülleinheit (1601) nach Anspruch 2 oder 3, **dadurch gekennzeichnet, dass** das erste Befestigungsprofil (1321A; 1321C) und/oder das zweite Befestigungsprofil (1322A; 1322C) mindestens eine Einführschräge (1332) aufweist, welche schräg zur Fügerichtung(V) verläuft.

5. Hülleinheit (1601) nach Anspruch 2, 3, oder 4, **dadurch gekennzeichnet, dass** die Befestigungsprofile (1321A, 1322A; 1321C, 1322C) zu einer Mittelebene, insbesondere zur neutralen Faser (N), symmetrisch ausgeführt sind, wobei das erste Befestigungsprofil (1321A; 1321C) und/oder das zweite Befestigungsprofil (1322A; 1322C) zwei symmetrisch angeordnete Einführschrägen (1332) aufweist.

6. Hülleinheit (1601) nach einem der Ansprüche 2 bis 5, **dadurch gekennzeichnet, dass** die Befestigungsprofile (1321A, 1322A; 1321C, 1322C) so ausgeführt sind, dass im Vergleich zur Verbindung zueinander passender Befestigungsprofile (1321A, 1322A; 1321C, 1322C) in Fügerichtung (V), diese nur mir deutlich höherem Kraftaufwand entgegen der Fügerichtung (V) lösbar sind oder lediglich in Längsrichtung (L) lösbar sind, wobei die Befestigungsprofile (1321A, 1322A; 1321C, 1322C) vorzugsweise einen Querschnitt mit Widerhaken-Funktion aufweisen.

7. Hülleinheit (901; 1001; 1101) nach einem der Ansprüche 1 bis 6, **dadurch gekennzeichnet, dass** diese mehrere rohrförmige Aufnahmen (902; 1002; 1102) zur getrennten Führung von jeweils mindestens einer Leitung (6) bildet.

8. Hülleinheit (1001) nach einem der Ansprüche 1 bis 7, **dadurch gekennzeichnet, dass** jede Aufnahme (1002) zwei in Längsrichtung (L) erstreckte zusammenwirkende Verschlussprofile (1011, 1012) eines Verschlusses aufweist, zum staubdichten Schließen eines geöffneten Zustands, in welchem eine Leitung (6) quer zur Längsrichtung (L) in eine der Aufnahmen (1002) eingefügt bzw. aus dieser entnommen werden kann.

9. Leitungsschutzführung für Leitungen, wie z.B. Kabel oder Schläuche, für eine Reinraumanwendung, mit einer länglichen, flexiblen Umhüllung (700; 900) die hin- und hergehend, insbesondere unter Bildung eines Umlenkbogens (4) zwischen zwei Trumen (1, 3), verfahrbar ist, wobei die Umhüllung (700; 900) mindestens eine Hülleinheit (701; 901; 1001) nach einem der vorstehenden Ansprüche aufweist.

10. Leitungsschutzführung nach Anspruch 9, **dadurch**
**gekennzeichnet, dass** die Umhüllung (700; 900) eine Mehrzahl separater Hülleinheiten (701; 901; 1001) umfasst, und jede Hülleinheit (701; 901; 1001) zwei beidseitig gegenüberliegende, mit der Hülleinheit (701; 901; 1001) einteilige Befestigungsbänder (720, 721; 920, 921; 1020, 1021) aufweist, benachbarte Hülleinheiten (701; 901; 1001) durch die Befestigungsbänder (720, 721; 920, 921; 1020, 1021) parallel miteinander verbunden sind und am ersten und zweiten Ende jeweils eine Klemmvorrichtung (130) vorgesehen ist, mit welcher die Mehrzahl separater Hülleinheiten (701; 901; 1001) der Umhüllung (700; 900) jeweils endseitig festgelegt sind.

11. Leitungsschutzführung nach Anspruch 10, **dadurch gekennzeichnet, dass** in einer Aufnahme (902) mindestens einer Hülleinheit (901) eine Stützkette (135) zum Stützen der Umhüllung (900) beim Verfahren vorgesehen ist.

12. Leitungsschutzführung nach Anspruch 10 oder 11, **dadurch gekennzeichnet, dass** jede Hülleinheit (1001) zwei zusammenwirkende Verschlussprofile (1011, 1012) eines Verschlusses aufweist, zum staubdichten Schließen eines geöffneten Zustands, in welchem eine Leitung (6) quer zur Längsrichtung (L) in eine Aufnahme (1002) eingefügt bzw. aus dieser entnommen werden kann.

13. Leitungsschutzführung nach Anspruch 11, **dadurch gekennzeichnet, dass** jede Hülleinheit (1001) einteilig ausgeführt ist, mehrere parallele Aufnahmen (1002) bildet und zu jeder Aufnahme (1002) ein Paar zusammenwirkender Verschlussprofile (1011, 1012) einteilig mit der Hülleinheit (1001) vorgesehen ist.

14. Leitungsschutzführung nach einem der vorstehenden Ansprüche 9 bis 13, **dadurch gekennzeichnet, dass** jede Aufnahme (702; 902; 1002) einen langrunden oder ovalen, insbesondere spitzovalen, Querschnitt aufweist und an jeder Schmalseite der Hülleinheit (701; 901; 1001), insbesondere mit der Hülleinheit (701; 901; 1001) einteilig, jeweils ein Befestigungsprofil (720, 721; 920, 921; 1020, 1021) als Befestigungsband vorgesehen ist.

15. Leitungsschutzführung nach Anspruch 9, 10 oder 11, **dadurch gekennzeichnet, dass** die Umhüllung (700) eine Mehrzahl separater und umfänglich geschlossener Hülleinheiten (701) umfasst, wobei jede Hülleinheit (701) jeweils genau eine Aufnahme (702) bildet und jede Hülleinheit (701) zwei beidseitig gegenüberliegende, mit der Hülleinheiten (701) einteilige Befestigungsbänder (720, 721) aufweist.

16. Leitungsschutzführung nach einem der vorstehenden Ansprüche 9 bis 15, **dadurch gekennzeichnet, dass** jede Hülleinheit (901) einen in Längsrichtung (L) gleichbleibenden Querschnitt hat, wobei insbesondere das erste und das zweite Befestigungsband (920, 921) einen in Längsrichtung (L) gleichbleibenden Querschnitt haben, insbesondere mit ineinandergreifendem Haken- und Klauenprofil.

17. Leitungsschutzführung nach einem der vorstehenden Ansprüche 9 bis 16, **dadurch gekennzeichnet, dass** die Aufnahmen (1302) parallel miteinander verbunden sind durch bandförmige Zwischenbereiche (1333) welche die neutrale Faser (N) vorgeben und die ersten und zweiten Befestigungsbänder bzw. -profile (1321A, 1322A) auf Höhe der neutralen Faser (N) der Umhüllung liegt, wobei vorzugsweise zwischen jedem Befestigungsband (1321A, 1322A) und einer angrenzenden Aufnahme (1302) ein dünnerer bandförmiger Zwischenbereich (1333) vorgesehen ist.

18. **Anordnung** umfassend die Leitungsschutzführung für eine Reinraumanwendung nach einem der Ansprüche 9 bis 17, außerdem umfassend
- mindestens eine Stützkette (135), insbesondere aus einzelnen Kettengliedern, welche ausgeführt ist, um einen Umlenkradius des Umlenkbogens (4) vorzugeben und/oder ein freitragendes Trum (1) in Strecklage zu stützen; wobei jede Stützkette (135) in einer zugeordneten Hülleinheit (901) geführt ist, welche ausschließlich die zugeordnete(n) Stützkette(n) (135) aufnimmt, sodass mit der zugeordneten Hülleinheit (901) die Stützkette(n) (135) getrennt von in der Umhüllung (900) geführten Leitungen (6) austauschbar ist.

## Claims

1. An encasing unit (901, 1201, 1401, 1601) of plastic for an elongate flexible encasement of a line protective guide for a clean room application, wherein the encasing unit (901, 1201, 1401, 1601) forms at least one receiving means (902, 1402, 1602) for guiding at least one line (6), which extends channel-like in a longitudinal direction (L) from a first end to a second end;
wherein the encasing unit (901, 1401, 1601) includes a first fixing strip (920, 1421, 1621) at one longitudinal side and a second fixing strip (921, 1422, 1622) at the other longitudinal side;
**characterised in that**
the fixing strips (920, 921, 1421, 1422, 1621, 1622) are arranged in opposite relationship and adapted to be connected to each other for a releasable connection by positively locking and/or force-locking engagement in mutually matching relationship and in a joining direction (V) transversely to the longitudinal direction (L) to releasably fix together a plurality of encasing units (901, 1401, 1601) with mutually matching fixing profiles (920, 921, 1421, 1422 1621, 1622) by connection of the fixing strips (920, 921, 1421, 1422 1621, 1622) in the joining direction (V) transversely to the longitudinal direction (L), wherein the first and second fixing strips (920, 921, 1421, 1422 1621, 1622) are respectively in one piece with the encasing unit (901, 1401, 1601).

2. An encasing unit (901, 1401, 1601) according to claim 1, **characterised in that** the fixing strips (920, 921, 1421, 1422 1621, 1622) are fixing profiles.

3. An encasing unit (901, 1401, 1601) according to claim 2 **characterised in that** the fixing profiles (920, 921, 1421, 1422, 1621, 1622) are designed in mutually congruent relationship and of a cross-section which is the same throughout in the longitudinal direction (L), that cooperate in mutually engaging relationship.

4. An encasing unit (1601) according to claim 2 or claim 3 **characterised in that** the first fixing profile (1321A, 1321C) and/or the second fixing profile (1322A, 1322C) has at least one inclined insertion portion (1332) extending inclinedly relative to the joining direction (V).

5. An encasing unit (1601) according to claim 2, claim 3 or claim 4 **characterised in that** the fixing profiles (1321A, 1322A, 1321C, 1322C) are symmetrical relative to a central plane, in particular the neutral fibre (N), wherein the first fixing profile (1321A, 1321C) and/or the second fixing profile (1322A, 1322C) have two symmetrically arranged inclined insertion portions (1332).

6. An encasing unit (1601) according to one of claims 2 to 5 **characterised in that** the fixing profiles (1321A, 1322A, 1321C, 1322C) are so designed that in comparison with the connection of mutually matching fixing profiles (1321A, 1322A, 1321C, 1322C) in the joining direction (V) they are releasable only with a markedly higher application of force in opposite relationship to the joining direction (V) or are releasable only in the longitudinal direction (L), wherein the fixing profiles (1321A. 1322A, 1321C, 1322C) are preferably of a cross-section with a barb function.

7. An encasing unit (901, 1001, 1101) according to one of claims 1 to 6 **characterised in that** it forms a plurality of tubular receiving means (902, 1002, 1102) for separate guidance of respectively at least one line (6).

8. An encasing unit (1001)according to one of claims 1 to 7 **characterised in that** each receiving means (1002) has two cooperating closure profiles (1011, 1012) of a closure, that extend in the longitudinal direction (L), for dust-tightly closing an opened state in which a line (6) can be introduced into or removed from one of the receiving means (1002) transversely to the longitudinal direction.

9. A line protective guide for lines like for example cables or hoses for a clean room application, comprising an elongate flexible encasement (700, 900) which is displaceable reciprocatingly, in particular with the formation of a direction-changing arc (4) between two runs (1, 3),
wherein the encasement (700, 900) has at least one encasing unit (701, 901, 1001) according to one of the preceding claims.

10. A line protective guide according to claim 9 **characterised in that** the encasement (700, 900) includes a multiplicity of separate encasing units (701, 901, 1001) and each encasing unit (701, 901, 1001) has two fixing strips (720 721, 920, 921, 1020, 1021) which are in opposite relationship on both sides and which are in one piece with the encasing unit (701, 901, 1001), adjacent encasing units (701, 901, 1001) are connected together in parallel relationship by the fixing strips (720, 721, 920, 921, 1020, 1021) and provided at the first and second end is a respective clamping device (130), with which the multiplicity of separate encasing units (701, 901, 1001) of the encasement (700, 900) are respectively secured at the end.

11. A line protective guide according to claim 10 **characterised in that** provided in a receiving means (902) of at least one encasing unit (901) is a support chain (135) for supporting the encasement (900) upon displacement.

12. A line protective guide according to claim 10 or claim 11 **characterised in that** each encasing unit (1001) has two cooperating closure profiles (1011, 1012) of a closure for dust-tightly closing an opened state in which a line (6) can be inserted into or removed from a receiving means (1002) transversely relative to the longitudinal direction (L).

13. A line protective guide according to claim 11 **characterised in that** each encasing unit (1001) is of a one-piece configuration, forms a plurality of parallel receiving means (1002) and provided for each receiving means (1002) is a pair of cooperating closure profiles (1011, 1012) in one piece with the encasing unit (1001).

14. A line protective guide according to one of the preceding claims 9 to 13 **characterised in that** each receiving means (702, 902, 1002) is of an elongatedly round or oval, in particular ogival cross-section and a respective fixing profile (720, 721, 920, 921, 1020, 1021) as the fixing strip is provided at each narrow side of the encasing unit (701, 901, 1001), in particular in one piece with the encasing unit (701, 901, 1001).

15. A line protective guide according to claim 9, claim 10 or claim 11 **characterised in that** the encasement (700) includes a multiplicity of separate and peripherally closed encasing units (701), wherein each encasing unit respectively forms precisely one receiving means (702) and each encasing unit (701) has two fixing strips (720, 721) which are in opposite relationship at both sides and which are in one piece with the encasing units (701).

16. A line protective guide according to one of the preceding claims 9 to 15 **characterised in that** each encasing unit (901) is of a cross-section which remains the same in the longitudinal direction, wherein in particular the first and the second fixing strips (921, 921) are of a cross-section which remains the same in the longitudinal direction (L), in particular with an interengaging hook and claw profile.

17. A line protective guide according to one of the preceding claims 9 to 16 **characterised in that** the receiving means (1302) are connected together in parallel relationship by strip-shaped intermediate regions (1333) which predetermine the neutral fibre (N) and the first and second fixing strips or profiles (1321A, 1322A) are disposed at the level of the neutral fibre (N) of the encasement, wherein preferably a thinner strip-shaped intermediate region (1333) is provided between each fixing strip (1321A, 1322A) and an adjoining receiving means (1302).

18. An arrangement comprising the line protective guide for a clean room application according to one of the claims 9 to 17, further including
- at least one support chain (135), in particular comprising individual chain links, which is adapted to predetermine a direction-changing radius of the direction-changing arc (4) and/or to support a self-supporting run (1) in the straight position, wherein
each support chain (135) is guided in an associated encasing unit (901) which receives exclusively the associated support chain or chains (135) so that with the associated encasing unit (901) the support chain or chains (135) are replaceable separately from the lines (6) guided in the encasement (900).

## Revendications

1. Unité de manchon (901; 1201; 1401; 1601) en matière plastique pour une enveloppe flexible allongée d'un guidage de protection de conducteurs pour une application en salle blanche, l'unité de manchon (901; 1201; 1401; 1601) formant au moins un logement (902; 1402; 1602) pour le guidage d'au moins un conducteur (6) qui s'étend à la manière d'un canal dans une direction longitudinale (L) d'une première extrémité à une deuxième extrémité; l'unité de manchon (901; 1401; 1601) comprenant une première bande de fixation (902; 1421; 1621) sur un côté longitudinal et une deuxième bande de fixation (921; 1422; 1622) sur l'autre côté longitudinal;
**caractérisée en ce que**
les bandes de fixation (920, 921; 1421, 1422; 1621, 1622) sont disposées en face l'une de l'autre et sont réalisées de manière à s'adapter l'une à l'autre pour une liaison amovible par complémentarité de forme et/ou par adhérence et à pouvoir être reliées l'une à l'autre dans une direction d'assemblage (V) transversale à la direction longitudinale (L), afin d'assembler plusieurs unités de manchon (901; 1401; 1601) avec des bandes de fixation (920, 921; 1421, 1422; 1621, 1622) en reliant les bandes de fixation (920, 921; 1421, 4122; 1621, 1622) les unes aux autres de manière amovible dans la direction d'assemblage (V) transversalement à la direction longitudinale (L), la première et la deuxième bande de fixation (920, 921; 1421, 1422; 1621, 1622) étant réalisées chacune en une seule pièce avec l'unité de manchon (901; 1401; 1601).

2. Unité de manchon (901; 1401; 1601) selon la revendication 1, **caractérisée en ce que** les bandes de fixation (920, 921; 1421, 1422; 1621, 1622) sont des profilés de fixation.

3. Unité de manchon (901; 1401; 1601) selon la revendication 2, **caractérisée en ce que** les profilés de fixation (920, 921; 1421, 1422; 1621, 1622) sont conjugués les uns aux autres et sont réalisés avec une section transversale identique en continu dans la direction longitudinale (L), qui coopèrent en s'engageant les uns dans les autres.

4. Unité de manchon (1601) selon la revendication 2 ou 3, **caractérisée en ce que** le premier profilé de fixation (1321A; 1321C) et/ou le deuxième profilé de fixation (1322A; 1322C) présente au moins une rampe d'entrée (1332) qui s'étend en oblique par rapport à la direction d'assemblage (V).

5. Unité de manchon (1601) selon la revendication 2, 3 ou 4, **caractérisée en ce que** les profilés de fixation (1321A, 1322A; 1321C, 1322C) sont réalisés de manière symétrique par rapport à un plan médian, notamment par rapport à la fibre neutre (N), le premier profilé de fixation (1321A; 1321C) et/ou le deuxième profilé de fixation (1322A; 1322C) présentant deux rampes d'entrée (1332) disposées symétriquement.

6. Unité de manchon (1601) selon l'une des revendications 2 à 5, **caractérisée en ce que** les profilés de fixation (1321A, 1322A; 1321C, 1322C) sont réalisés de telle sorte que, par rapport à l'assemblage de profilés de fixation compatibles entre eux (1321A, 1322A; 1321C, 1322C) dans la direction d'assemblage (V), ceux-ci ne peuvent être détachés qu'avec un effort nettement plus important dans le sens opposé à la direction d'assemblage (V) ou ne peuvent être détachés que dans la direction longitudinale (L), les profilés de fixation (1321A, 1322A; 1321C, 1322C) présentant de préférence une section transversale avec une fonction de barbillon.

7. Unité de manchon (901; 1001; 1101) selon l'une des revendications 1 à 6, **caractérisée en ce qu'**elle forme plusieurs logements tubulaires (902; 1002; 1102) pour le guidage séparé d'au moins un conducteur (6) chacun.

8. Unité de manchon (1001) selon l'une des revendications 1 à 7, **caractérisée en ce que** chaque logement (1002) comprend deux profilés de fermeture coopérants (1011, 1012) d'une fermeture, s'étendant dans la direction longitudinale (L), pour fermer de manière étanche à la poussière un état ouvert dans lequel un conduit (6) peut être inséré dans ou retiré de l'un des logements (1002) transversalement à la direction longitudinale (L).

9. Guidage de protection de conducteurs, telles que des câbles ou des tuyaux, pour une application en salle blanche, avec un manchon flexible allongé (700; 900) qui peut être déplacée en va-et-vient, en particulier en formant un arc de déviation (4) entre deux brins (1, 3), le manchon (700; 900) présentant au moins une unité de manchon (701; 901; 1001) selon l'une des revendications précédentes.

10. Guidage de protection de conducteurs selon la revendication 9, **caractérisé en ce que** le manchon (700; 900) comprend une pluralité d'unités de manchon séparées (701; 901; 1001) et chaque unité de manchon (701; 901; 1001) comprend deux bandes de fixation (720, 721; 920, 921; 1020, 1021) en une pièce, des unités de manchon voisines (701; 901; 1001) sont reliées parallèlement entre elles par les bandes de fixation (720, 721; 920, 921; 1020, 1021) et il est prévu à la première et à la deuxième extrémité respectivement un dispositif de serrage (130) avec lequel la pluralité d'unités de manchon séparées (701; 901; 1001) du manchon (700; 900) peuvent sont fixées respectivement côté extrémité.

11. Guidage de protection de conducteurs selon la revendication 10, **caractérisé en ce qu'**une chaîne d'appui (135) est prévue dans un logement (902) d'au moins une unité de manchon (901) pour supporter le manchon (900) lors du déplacement.

12. Guidage de protection de conducteurs selon la revendication 10 ou 11, **caractérisé en ce que** chaque unité de manchon (1001) comprend deux profilés de fermeture (1011, 1012) coopérant d'une fermeture, pour la fermeture étanche à la poussière d'un état ouvert dans lequel un conducteur (6) peut être insérée dans ou retirée d'un logement (1002) transversalement à la direction longitudinale (L).

13. Guidage de protection de conducteurs selon la revendication 11, **caractérisé en ce que** chaque unité de manchon (1001) est réalisée d'une seule pièce, forme plusieurs logements parallèles (1002) et, pour chaque logement (1002), une paire de profilés de fermeture coopérants (1011, 1012) est prévue d'une seule pièce avec l'unité de manchon (1001).

14. Guidage de protection de conducteurs selon l'une des revendications 9 à 13 précédentes, **caractérisé en ce que** chaque logement (702; 902; 1002) présente une section transversale longue ou ovale, en particulier ovale pointue, et **en ce qu'**il est prévu sur chaque petit côté de l'unité de manchon (701; 901; 1001), en particulier en une seule pièce avec l'unité de gaine (701; 901; 1001), respectivement un profilé de fixation (720, 721; 920, 921; 1020, 1021) servant de bande de fixation.

15. Guidage de protection de conducteurs selon la revendication 9, 10 ou 11, **caractérisé en ce que** la manchon (700) comprend une pluralité d'unités de manchon (701) séparées et fermées sur leur périphérie, chaque unité de manchon (701) formant respectivement exactement un logement (702) et chaque unité de manchon (701) présentant deux bandes de fixation (720, 721) opposées de part et d'autre et en une seule pièce avec l'unité de manchon (701).

16. Guidage de protection de conducteurs selon l'une des revendications 9 à 15 précédentes, **caractérisé en ce que** chaque unité de manchon (901) a une section transversale constante dans la direction longitudinale (L), en particulier la première et la deuxième bande de fixation (920, 921) ont une section transversale constante dans la direction longitudinale (L), en particulier avec un profil de crochet et de griffe s'engageant l'un dans l'autre.

17. Guidage de protection de conducteurs selon l'une des revendications 9 à 16 précédentes, **caractérisé en ce que** les logements (1302) sont reliés parallèlement entre eux par des zones intermédiaires en forme de bande (1333) définissant la fibre neutre (N), et les première et deuxième bandes ou profilés de fixation (1321A, 1322A) sont situés au niveau de la fibre neutre (N) du manchon, une zone intermédiaire en forme de bande mince (1333) étant de préférence prévue entre chaque bande de fixation (1321A, 1322A) et un logement adjacent (1302).

18. Ensemble comprenant le guidage de protection de conducteurs pour une application en salle blanche selon l'une des revendications 9 à 17, comprenant en outre
- au moins une chaîne d'appui (135), en particulier constituée de maillons de chaîne individuels, qui est réalisée pour prédéfinir un rayon de déviation du coude de déviation (4) et/ou pour supporter un brin en porte-à-faux (1) en position d'extension;
chaque chaîne d'appui (135) étant guidée dans une unité de manchon associée (901) qui reçoit exclusivement la ou les chaînes de support associées (135), de sorte qu'avec l'unité de manchon associée (901), la ou les chaînes de support (135) peuvent être remplacées séparément des conducteurs (6) guidés dans le manchon (900).
